(19) Europäisches Patentamt / European Patent Office / Office européen des brevets

(11) **EP 4 132 180 B1**

(12) **EUROPEAN PATENT SPECIFICATION**

(45) Date of publication and mention
of the grant of the patent:
**11.12.2024 Bulletin 2024/50**

(21) Application number: **20930101.9**

(22) Date of filing: **10.04.2020**

(51) International Patent Classification (IPC):
*H04W 72/12* (2023.01)  *H04L 1/18* (2023.01)
*H04L 5/00* (2006.01)  *H04L 1/1829* (2023.01)

(52) Cooperative Patent Classification (CPC):
**H04L 1/1861; H04L 1/1896;** H04W 72/23

(86) International application number:
**PCT/CN2020/084328**

(87) International publication number:
**WO 2021/203446 (14.10.2021 Gazette 2021/41)**

(54) **DAI CONFIGURATION METHOD AND DEVICE, DAI INDICATION METHOD AND DEVICE, DAI SENDING METHOD AND DEVICE, AND MEDIUM**

DAI-KONFIGURATIONSVERFAHREN UND -VORRICHTUNG, DAI-ANZEIGEVERFAHREN UND -VORRICHTUNG, DAI-SENDEVERFAHREN UND -VORRICHTUNG UND MEDIUM

PROCÉDÉ ET DISPOSITIF DE CONFIGURATION DE DAI, PROCÉDÉ ET DISPOSITIF D'INDICATION DE DAI, PROCÉDÉ ET DISPOSITIF D'ENVOI DE DAI, ET SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.02.2023 Bulletin 2023/06**

(73) Proprietor: **GUANGDONG OPPO MOBILE TELECOMMUNICATIONS CORP., LTD.**
**Dongguan, Guangdong 523860 (CN)**

(72) Inventors:
• **XU, Jing**
**Dongguan, Guangdong 523860 (CN)**
• **LIN, Yanan**
**Dongguan, Guangdong 523860 (CN)**

(74) Representative: **Grassi, Stefano**
**Bugnion S.p.A.**
**Viale Lancetti, 17**
**20158 Milano (IT)**

(56) References cited:
EP-A1- 3 358 877    WO-A1-2017/160350
WO-A1-2020/048364    CN-A- 109 474 405
CN-A- 109 565 839    CN-A- 110 493 879
CN-A- 110 875 814    US-A1- 2021 184 803
US-B2- 10 484 983

**Description**

Technical Field

The present application relates to the field of mobile communication, in particular to a method for configuring a DAI (Downlink Assignment Index), a method for indicating a DAI, a method for sending a DAI, a device and a medium.

Background

At present, in a wireless communication network, a terminal device communicates with a network device, and the terminal device may send HARQ-ACK (Hybrid Automatic Repeat reQuest Acknowledgement) information to the network device, so that the network device can determine whether the terminal device correctly receives data.

In the related technology, a network device sends a DCI (Downlink Control Information) message to a terminal device, and a DAI field carried in the DCI may be used to count sent DCI messages, and the terminal device generates a dynamic HARQ-ACK codebook according to the DAI field, to feed back to the network device whether the terminal device receives the message correctly.

In the related technology, the counter DAI field is indicated by 2 bits, and then a position of a HARQ-ACK in a HARQ-ACK codebook is determined by means of counter DAI+j*4. However, in other designs, a scheme of DAI field indicated by 1 bit is proposed. When there may be DAIs with different bit numbers in multiple DCIs corresponding to the same HARQ-ACK feedback window, a conflict will occurs in a determination process of the above positions, thereby the determination process of the above positions cannot be used normally.

Related technology is known from EP3358877A1 (NTT DOCOMO INC [JP]) 8 August 2018.

Summary

Embodiments of the present application provide a method for configuring a DAI, a device and as defined in the attached independent claims. Further improvements and embodiments are provided in the dependent claims. The technical solutions are as follows.

Brief Description of Drawings

In order to describe technical solutions in the implementations of the present application more clearly, drawings that need to be used in the description of the implementations will be briefly introduced below. It is apparent that the drawings described below are only some implementations of the present application, and for those of ordinary skills in the art, other drawings may be obtained according to these drawings without paying inventive efforts.

FIG. 1 shows a block diagram of a communication system according to an exemplary implementation of the present application.
FIG. 2 shows a flowchart of a method for configuring a DAI according to an exemplary implementation of the present application.
FIG. 3 shows a flowchart of a method for indicating a DAI according to an exemplary implementation of the present application. This is not part of the claimed invention.
FIG. 4 shows a flowchart of a method for indicating a DAI according to an exemplary implementation of the present application. This is not part of the claimed invention.
FIG. 5 shows a flowchart of a method for indicating a DAI according to an exemplary implementation of the present application. This is not part of the claimed invention.
FIG. 6 shows a flowchart of a method for indicating a DAI according to an exemplary implementation of the present application. This is not part of the claimed invention.
FIG. 7 shows a flowchart of a method for sending a DAI according to an exemplary implementation of the present application. This is not part of the claimed invention.
FIG. 8 shows a block diagram of a device for configuring a DAI according to an exemplary implementation of the present application.
FIG. 9 shows a block diagram of a device for indicating a DAI according to an exemplary implementation of the present application. This is not part of the claimed invention.
FIG. 10 shows a block diagram of a device for indicating a DAI according to an exemplary implementation of the present application. This is not part of the claimed invention.
FIG. 11 shows a block diagram of a device for indicating a DAI according to an exemplary implementation of the present application. This is not part of the claimed invention.

FIG. 12 shows a block diagram of a device for sending a DAI according to an exemplary implementation of the present application. This is not part of the claimed invention.

FIG. 13 shows a block diagram of a device for sending a DAI according to an exemplary implementation of the present application. This is not part of the claimed invention.

FIG. 14 shows a schematic diagram of a structure of a communication device according to an exemplary implementation of the present application.

Detailed Description

In order to make objects, technical solutions, and advantages of the present application clearer, implementations of the present application will be described in further detail below with reference to the drawings.

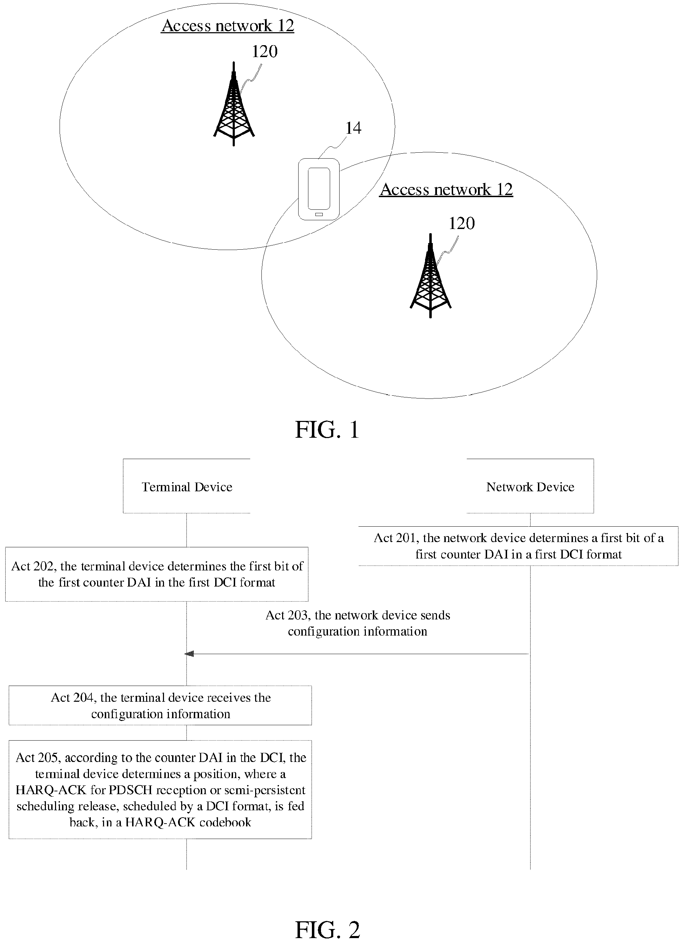

FIG. 1 shows a block diagram of a communication system according to an exemplary implementation of the present application, which may include an access network 12 and a terminal device 14.

The access network 12 includes multiple network devices 120. The network device 120 may be a base station, which is a device deployed in an access network to provide a wireless communication function for a terminal. The base station may include macro base stations, micro base stations, relay stations, access points, etc. of various forms. In systems using different radio access technologies, names of devices with base station functions may be different. For example, in the LTE system, it is called eNodeB or eNB; in the 5G NR-U system, it is called gNodeB or gNB. With the evolution of communication technology, the description of "base station" may change. For convenience, in the implementations of the present application, the above-mentioned devices for providing wireless communication functions for the terminal device 14 are collectively referred to as access network devices.

The above terminal device 14 may include various handheld devices, vehicle-mounted devices, wearable devices, computing devices, that have wireless communication functions, or other processing devices connected to a wireless modem, and various types of user equipments, Mobile Stations (MSs), terminal devices, and the like. For convenience of description, the above-mentioned devices are collectively referred to as terminals. The access network device 120 and the terminal device 14 communicate with each other via some air interface technology such as a Uu interface.

The technical solutions of the implementations of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, an Advanced Long Term Evolution (LTE-A) system, a New Radio (NR) system, an evolution system of an NR system, an LTE-based access to unlicensed spectrum (LTE-U) system, an NR-based access to unlicensed spectrum (NR-U) system, a Universal Mobile Telecommunications System (UMTS), a Worldwide Interoperability for Microwave Access (WiMAX) communication system, Wireless Local Area Networks (WLANs), Wireless Fidelity (WiFi), a next generation communication system, or other communication systems.

Generally, traditional communication systems support a limited quantity of connections, and are easy to implement. However, with the development of communication technology, mobile communication systems will not only support traditional communications, but also support, for example, Device to Device (D2D) communication, Machine to Machine (M2M) communication, Machine Type Communication (MTC), Vehicle to Vehicle (V2V) communication, and Vehicle to everything (V2X) system, etc. The implementations of the present application are also applicable to these communication systems.

In related art, for dynamic HARQ-ACK codebook, a position of a HARQ-ACK for PDSCH reception or SPS release in a HARQ-ACK codebook corresponds to a transmission number of the PDSCH reception or SPS release in the HARQ-ACK codebook.

Optionally, the position of PDSCH reception or SPS release in the HARQ-ACK codebook is indicated by a value of a counter DAI.

It should be noted that since bits in the counter DAI field are limited, only the counter DAI is used, and the counter DAI cannot correspond to the transmission number one to one. Therefore, the transmission number corresponding to the counter DAI is determined by means of modulus operation.

Herein, the value of the counter DAI field = MOD (transmission number Y of PDSCH reception or SPS release in a HARQ-ACK codebook, 4).

For example, when Y=1, 2, 3, 4, 5, 6, according to the above formula, it can be determined that the counter DAI=1, 2, 3, 0, 1, 2.

Furthermore, in order to determine Y corresponding to the counter DAI, an accumulation of the number of flips j of the counter DAI is added in the protocol, and Y=counter DAI+j*4.

When the value of DAI is less than a value of a DAI last time, the value of j is increased by 1.

In the same HARQ-ACK codebook window, if the bits of the counter DAI field are 2 bits, the Y corresponding to each counter DAI may be determined in sequence by adopting the above manner, and the determined Y value is the correct transmission number.

However, if the bits of the counter DAI fields corresponding to the PDSCH reception or SPS release corresponding to the HARQ-ACK in the same HARQ-ACK codebook are different, an error will occur in determining the position of the HARQ-ACK in the above manner.

For example, as shown in FIG. 1, there are seven PDSCH transmissions, i.e., 0, 1, 2, 3, 4, 5, and 6, in one HARQ-ACK codebook window. These seven PDSCH transmissions are polled 2-bit DAI and 1-bit DAI indications in turn, and the DAI values are values in row 2 and row 3 of Table 1, respectively. Alternatively, the numbers of flips j determined from the DAI values are shown in row 4 of Table 1. Then positions of HARQ-ACK bits calculated by the above manner are 0, 1, 2, 5, 8, 9 and 10, and the positions of HARQ-ACK bits corresponding to PDSCH transmissions 3, 4, 5 and 6 are wrongly calculated as 5, 8, 9 and 10, which leads to the inconsistency between the actual PDSCH transmission number and the calculated PDSCH transmission number, resulting in that the network device is unable to correctly interpret the corresponding relationship between HARQ-ACK information field and the PDSCH.

Table 1

| Actual number of transmissions Y | 0 | 1 | 2 | 3 | 4 | 5 | 6 |
|---|---|---|---|---|---|---|---|
| Counter DAI value (2bits) = Ymod4 | 0 | | 2 | | 0 | | 2 |
| Counter DAI value (1bit) = Ymod2 | | 1 | | 1 | | 1 | |
| Counter DAI numbers of flips (2bits) j | 0 | 0 | 0 | 1 | 2 | 2 | 2 |
| Position of HARQ-ACK = 4*j+DAI value | 0 | 1 | 2 | 5 | 8 | 9 | 10 |

The present application provides at least three solutions to the above technical problems, which are respectively described below (in no particular order).

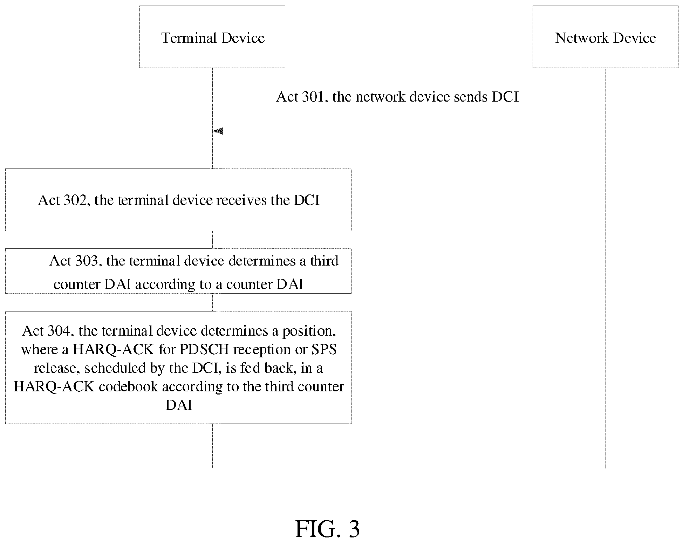

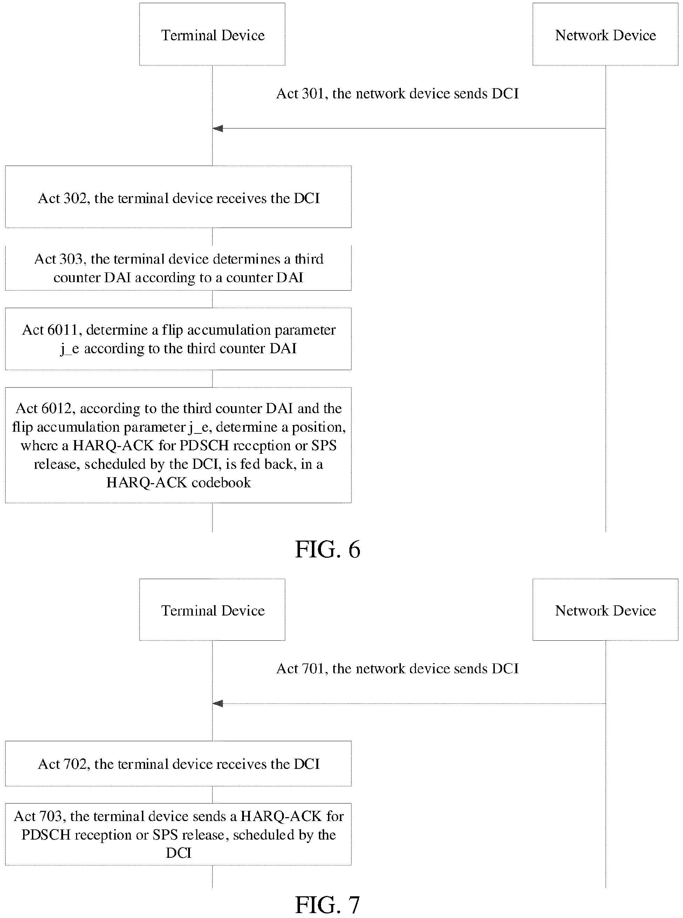

In the implementation shown in FIG. 2, the first bit of the first counter DAI field of the first DCI format configured by the network device for the terminal device is the same as the second bit of the second counter DAI field of the second DCI format, and later the terminal device determines positions of HARQ-ACKs fed back for PDSCH reception or SPS release, scheduled by the first DCI format, and PDSCH reception or SPS release, scheduled by the first DCI format, in a HARQ-ACK codebook according to the first counter DAI and the second counter DAI. In the implementations shown in FIGS. 3-6, the terminal device determines the corresponding third counter DAI according to the counter DAI field in the DCI, where the determined third counter DAI is a reference counter DAI, then the terminal device determines a position of a HARQ-ACK fed back for PDSCH reception or SPS release, scheduled by the DCI, in a HARQ-ACK codebook according to the third counter DAI. In the implementation shown in FIG. 7, the terminal device determines the resource position directly according to the received DCI, and sends a HARQ-ACK for PDSCH reception or SPS release, scheduled by DCI, on the resource position.

For the first possible solution

FIG. 2 shows a flowchart of a method for configuring a DAI according to an exemplary implementation of the present application, which is applied to the terminal device and the network device as shown in FIG. 1. The method includes at least some of the following contents.

In act 201, a network device determines a first bit of a first counter DAI in a first DCI format.

In act 202, a terminal device determines the first bit of the first counter DAI in the first DCI format.

In an implementation, the first bit is agreed in a protocol. The first DCI format may be any one of DCI format 1_1, DCI format 0_1, DCI format 1_0 and DCI format 0_0.

Alternatively, the first bit is 1 bit or 2 bits.

In act 203, the network device sends configuration information.

In act 204, the terminal device receives the configuration information.

Herein, the configuration information is used for configuring a second bit of a second counter DAI in a second DCI format.

The terminal device may first determine the first bit of the first counter DAI in the first DCI format, then receive configuration information, and determine a second bit of a second counter DAI in a second DCI format according to the configuration information.

Alternatively, the terminal device may first determine the first bit of the first counter DAI in the first DCI format and then determine the second bit of the second counter DAI in the second DCI format according to the configuration information. Alternatively, the terminal device may first determine the second bit of the second counter DAI in the second DCI format, and then determine the first bit of the first counter DAI in the first DCI format according to the configuration information. Alternatively, the terminal device may simultaneously determine the first bit of the first counter DAI in the first DCI format and the second bit of the second counter DAI in the second DCI format according to the configuration information.

Alternatively, the second DCI format may be any one of DCI format0_2, DCI format1_2. Alternatively, the second bit is 1 bit or 2 bits.

Herein, a HARQ-ACK for the PDSCH reception or SPS release, scheduled by the first DCI format, and a HARQ-ACK for the PDSCH reception or SPS release, scheduled by the second DCI format, are fed back in the same HARQ-ACK codebook.

Optionally, the configuration information is configured by high layer signaling.

In one possible implementation, the first bit is the same as the second bit.

When the network device configures the DAI field of DCI, if the bits of the DAI fields of DCIs configured by the network device are different, a case in which the HARQ-ACK position determined in the related technology is wrong will occur. Therefore, the first bit and the second bit configured by the network device are the same, and the terminal device may determine the position of the HARQ-ACK according to the first DAI and the second DAI with the same bit.

For example, PDSCH 1 in the same HARQ-ACK codebook window is scheduled by DCI format 1_1, and bits of the counter DAI field in DCI format 1_1 are 2 bits, and PDSCH 2 is scheduled by DCI format 1_2, then bits of the counter DAI field in DCI format 1_2 also needs to be configured as 2 bits.

For another example, if PDSCH 1 and PDSCH 2 in the first HARQ-ACK codebook window are scheduled by DCI format 1_1, and the bits of the counter DAI field in DCI format 1_1 are 2 bits, PDSCH 3 and PDSCH 4 in the second HARQ-ACK codebook window are scheduled by DCI format 1_2. Since the first HARQ-ACK codebook and the second HARQ-ACK codebook are different HARQ-ACK codebooks, the bits of the counter DAI field in DCI format 1_1 have no need to be the same as the bits of the counter DAI field in DCI format 1_2, which may be 1 bit or 2 bits.

In another possible implementation, an effective bit of the first bit is the same as that of the second bit.

If the first bit and the second bit are different, the network device may configure the effective bit for the terminal device, so that the effective bit of the first bit and the effective bit of the second bit are the same. Later, the terminal device determines the position of the HARQ-ACK according to the effective bit of the first DAI field and the effective bit of the second DAI field, thus ensuring the accuracy of the determined position of the HARQ-ACK.

For example, PDSCH 1 in the same HARQ-ACK codebook window is scheduled by DCI format 1_1, and the bits of the counter DAI field in DCI format 1_1 are 2 bits; PDSCH 2 is scheduled by DCI format 1_2, then when the counter DAI field in DCI format 1_2 is 1 bit, the effective bit of the counter DAI field in DCI format 1_1 is configured to be 1 bit, and the effective bit of the counter DAI field in DCI format 1_2 is also 1 bit.

Alternatively, the effective bit of the first bit and the effective bit of the second bit are the minimum of the first bit and the second bit.

For example, PDSCH 1 in the same HARQ-ACK codebook window is scheduled by DCI format 1_1, the bits of counted DAI field in DCI format 1_1 are 2 bits, PDSCH 2 is scheduled by DCI format 1_2, the bits of counted DAI field in DCI format 1_1 or DCI format 1_2 are 1 bit, then the effective bit of counter DAI field in DCI format 1_1 or DCI format 1_2 is 1 bit.

Optionally, bits other than the effective bit in the first bit of the first counter DAI are used for indicating other information other than the first counter DAI, or bits other than the effective bit in the second bit of the second counter DAI are used for indicating other information other than the second counter DAI.

The other information at least includes one of the following: priority information; open-loop power information.

Alternatively, the least significant 1 bit in the counter DAI field in DCI format 1_1 is used for DAI counting, and the most significant 1 bit is not used for DAI counting. In this case, the most significant 1 bit in the counter DAI field may be used to indicate other information, such as service priority, or total DAI information, etc.

For another example, if PDSCH 1 and PDSCH 2 in the first HARQ-ACK codebook window are scheduled by DCI format 1_1, and the bits of the counter DAI field in DCI format 1_1 are 2 bits, PDSCH 3 and PDSCH 4 in the second HARQ-ACJ codebook window are scheduled by DCI format 1_2. Since the first HARQ-ACK codebook and the second HARQ-ACK codebook are different HARQ-ACK codebooks, the bits of the counter DAI field in DCI format 1_1 has no need to be the same as the bits of the counter DAI field in DCI format 1_2, which may also be 1 bit or 2 bits. The effective bits of the counter DAI field in DCI format 1_1 are 2 bits.

It should be noted that the HARQ-ACK codebook in the implementation of the present application may be a Type 2HARQ-ACK codebook. Alternatively, the HARQ-ACK codebook in the implementation of the present application may be a type 1 HARQ-ACK codebook, or the HARQ-ACK codebook of the present application may be the type 1 HARQ-ACK codebook and the type 2 HARQ-ACK codebook.

The type 2 HARQ-ACK codebook is a dynamic HARQ-ACK codebook, and the type 1 HARQ-ACK codebook is a semi-persistent HARQ-ACK codebook.

In act 205, according to the counter DAI in the DCI, the terminal device determines a position of a HARQ-ACK fed back for PDSCH reception or Semi Persistent Scheduling (SPS) release, scheduled by a DCI format, in a HARQ-ACK codebook.

After determining the counter DAI field in the DCI, the terminal device may determine the position of the HARQ-ACK fed back in a HARQ-ACK codebook according to the bits of the counter DAI field in the determined DCI format.

According to the method provided by the implementation of the present application, the terminal device determines a first bit of a first counter DAI in a first DCI format, after receiving the configuration information, according to the configuration information, the terminal device determines the second bit of the second counter DAI in the second DCI format, and the first bit and the second bit are same, it may be determined that the bits of the counter DAI fields corresponding to the PDSCH reception or SPS release corresponding to HARQ-ACKs in a HARQ-ACK codebook are same. Later the terminal device can ensure the accuracy of the determined position of the HARQ-ACK when the position of the HARQ-ACK is determined according to the counter DAI field.

Moreover, when the effective bit of the first bit is the same as the effective bit of the second bit, the accuracy of the determined position of the HARQ-ACK can be ensured.

Through description of related technologies, it can be determined that the cause of the error is mainly due to the difference between the first bit of the first DAI field and the second bit of the second DAI field, and the values when the modulus values are also different. As a result, an error will occur in determining the flip times corresponding to the DAI according to the counter DAI. Therefore, in the implementations shown in FIGS. 3-6, a third counter DAI is determined according to the counter DAI field, and the third counter DAI changes the modulus value, so that the error caused by the difference between the first bit of the first DAI field and the second bit of the second DAI field can be counteracted. Later, the terminal device can ensure the accuracy of the determined position of the HARQ-ACK fed back for PDSCH reception or SPS release, scheduled by the DCI, in the HARQ-ACK codebook according to the third counter DAI.

For the second possible example

FIG. 3 shows a flowchart of a method for indicating a DAI according to an exemplary implementation of the present application, which is applied to the terminal device and the network device as shown in FIG. 1. The method includes at least some of the following contents.

In act 301, the network device sends DCI.

In the same HARQ-ACK codebook window, the network device can send one or more DCIs to the terminal device. The following are some examples.

1. The network device sends multiple DCIs to the terminal device, wherein the multiple DCIs are all in the first DCI format.
2. The network device sends multiple DCIs to the terminal device, wherein the multiple DCIs are all in the second DCI format.
3. The network device sends multiple DCIs to the terminal device, and the first DCI format and the second DCI format simultaneously exist in the multiple DCIs.

Implementations of the present application are illustrated by taking the first DCI format and the second DCI format simultaneously existing in the multiple DCIs as an example.

In act 302, the terminal device receives the DCI.

Each DCI includes a counter DAI field. The format of the DCI includes a first DCI format and/or a second DCI format. When the format of the DCI is the first DCI format, the counter DAI is the first counter DAI, and the bit of the first counter DAI is the first bit. When the format of the DCI is the second DCI format, the counter DAI is the second counter DAI, and the bit of the second counter DAI is the second bit.

In act 303, the terminal device determines a third counter DAI according to the counter DAI.

The third counter DAI is used for the terminal device to determine a position of a HARQ-ACK fed back for PDSCH reception or SPS release, scheduled by the DCI format, in a HARQ-ACK codebook. The third counter DAI may be understood as a reference counter DAI, a base counter DAI, an intermediate counter DAI, a conversion counter DAI, and the like.

In a case where a first counter DAI and a second counter DAI of different bits exist simultaneously in multiple DCIs, the third counter DAI is used as an intermediate value or a reference value or a conversion value of the first counter DAI and the second counter DAI.

Alternatively, the third counter DAI may be equal to the counter DAI in the DCI, or the third counter DAI may be equal to a numerical value obtained by performing an operation of modulo a positive integer M on the counter DAI in the DCI, or the third counter DAI may be equal to a sum of a modulus and y, wherein the modulus is a numerical value obtained by performing an operation of modulo the positive integer M on subtracted counter DAI that is obtained by subtracting y from the counter DAI, and y is a non-negative integer.

For example, when the counter DAI in the DCI is 0, it is determined that the third counter DAI is 0.

When the third counter DAI can be equal to a numerical value obtained by performing an operation of modulo a positive integer M on the counter DAI in the DCI, the third counter DAI is represented by using the third counter DAI = modulo (counter DAI, positive integer M) .

For example, when the value of the counter DAI is 1 and the positive integer M is 2, then the third counter DAI = modulo (1, 2) = 1.

In addition, the third counter DAI is equal to a sum of a modulus and y, and the modulus is a numerical value obtained by performing an operation of modulo the positive integer M on subtracted counter DAI that is obtained by subtracting y from the counter DAI, and y is a non-negative integer, the third counter DAI is represented by using the third counter DAI = modulo (counter DAI-y, positive integer M) + y.

For example, the value of the counter DAI is 1, the positive integer M is 2, y is 1, and the third counter DAI = modulo (0, 2) + y = 1.

Alternatively, when the counter DAI is counted from 0, the third counter DAI may be equal to a numerical value obtained by performing an operation of modulo a positive integer M on the counter DAI in the DCI. When the counter DAI is counted from y, the third counter DAI is equal to a sum of a modulus and y, the modulus is a numerical value obtained by performing an operation of modulo the positive integer M on subtracted counter DAI that is obtained by subtracting y from the counter DAI.

When the counter DAI is the first counter DAI, the third counter DAI is equal to the first counter DAI, or the third counter DAI is equal to a numerical value obtained by performing an operation of modulo a positive integer M on the first counter DAI, or the third counter DAI is equal to a sum of a modulus and y. The modulus is a numerical value obtained by performing an operation of modulo the positive integer M on subtracted counter DAI that is obtained by subtracting y from the first counter DAI, and y is a non-negative integer.

When the counter DAI is the second counter DAI, the third counter DAI is equal to the second counter DAI, or the third counter DAI is equal to a numerical value obtained by performing an operation of modulo a positive integer M on the second counter DAI, or the third counter DAI is equal to a sum of a modulus and y. The modulus is a numerical value obtained by performing an operation of modulo the positive integer M on subtracted counter DAI that is obtained by subtracting y from the second counter DAI, and y is a non-negative integer.

In a possible implementation, the positive integer M is the minimum of the first parameter and the second parameter.

For example, if the first parameter is 4 and the second parameter is 2, the positive integer M is 2.

Herein, the first parameter is determined by the first bit and the second parameter is determined by the second bit.

Optionally, the first parameter is equal to 2 to a power of the first bit and the second parameter is equal to 2 to a power of the second bit.

For example, if the first bit is 2, then 2 to the power of the first bit is 4, and the second bit is 1, then 2 to the power of the second bit is 2.

In another possible implementation, the positive integer M is the greatest common divisor of the first parameter and the second parameter.

For example, if the first parameter is 4 and the second parameter is 2, the greatest common divisor of the first parameter and the second parameter is 2, and the positive integer M is determined to be 2.

Herein, the first parameter is determined by the first bit and the second parameter is determined by the second bit.

Optionally, the first parameter is equal to 2 to a power of the first bit and the second parameter is equal to 2 to a power of the second bit.

For example, if the first bit is 2, then 2 to the power of the first bit is 4, and the second bit is 1, then 2 to the power of the second bit is 2.

Optionally, the first parameter corresponds to a first DCI format, and the second parameter corresponds to a second DCI format.

The first DCI format may be any one of DCI format 1_1, DCI format 0_1, DCI format 1_0 and DCI format 0_0, and the second DCI format may be any one of DCI format 0_2 and DCI format 1_2.

Alternatively, when the third counter DAI is equal to the counter DAI in the DCI, any of the following items 1 to 8 may be included.

1. When PDSCH reception or SPS release corresponding to a HARQ-ACK fed back in a same HARQ-ACK codebook is scheduled by the first DCI format or the second DCI format, the third counter DAI is equal to the counter DAI.

2. When PDSCH reception or SPS release corresponding to a HARQ-ACK fed back in a same HARQ-ACK codebook is scheduled by the first DCI format and the second DCI format, and the first bit and the second bit are the same, the third counter DAI is equal to the counter DAI.

3. When PDSCH reception or SPS release corresponding to a HARQ-ACK fed back in a same HARQ-ACK codebook is scheduled by the first DCI format and the second DCI format, and the bit of the counter DAI is the minimum of the first bit and the second bit, the third counter DAI is equal to the counter DAI.

4. When PDSCH reception or SPS release corresponding to a HARQ-ACK fed back in a same HARQ-ACK codebook is scheduled by the first DCI format and the second DCI format, and 2 to a power of the bit of the counter DAI is the greatest common divisor of 2 to a power of the first bit and 2 to a power of the second bit, the third counter DAI is equal to the counter DAI.

5. When only the first DCI format or the second DCI format is configured, the third counter DAI is equal to the counter DAI.

6. When the first DCI format and the second DCI format are configured and the first bit and the second bit are same, the third counter DAI is equal to the counter DAI.

7. When the first DCI format and the second DCI format are configured and the bit of the counter DAI is the minimum of the first bit and the second bit, the third counter DAI is equal to the counter DAI.

8. When the first DCI format and the second DCI format are configured and 2 to a power of the bit of the counter DAI is the greatest common divisor of 2 to a power of the first bit and 2 to a power of the second bit, the third counter DAI is equal to the counter DAI.

Alternatively, when the third counter DAI may be equal to a numerical value obtained by performing an operation of modulo a positive integer M on the counter DAI in the DCI, or the third counter DAI may be equal to a sum of a modulus and y, the modulus is a numerical value obtained by performing an operation of modulo the positive integer M on subtracted counter DAI that is obtained by subtracting y from the counter DAI, and y is a non-negative integer, any of the following items 1 to 4 may be included.

1. When PDSCH reception or SPS release corresponding to a HARQ-ACK fed back in a same HARQ-ACK codebook is scheduled by the first DCI format and the second DCI format, and the bit of the counter DAI is greater than the minimum of the first bit and the second bit, the third counter DAI is equal to a numerical value obtained by performing an operation of modulo a positive integer M on the counter DAI, or the third counter DAI is equal to a sum of a modulus and y, wherein the modulus is a numerical value obtained by performing an operation of modulo the positive integer M on subtracted counter DAI that is obtained by subtracting y from the counter DAI, and y is a non-negative integer.

2. When PDSCH reception or SPS release corresponding to a HARQ-ACK fed back in a same HARQ-ACK codebook is scheduled by the first DCI format and the second DCI format, and 2 to a power of the bit of the counter DAI is the greatest common divisor of 2 to a power of the first bit and 2 to a power of the second bit, the third counter DAI is equal to a numerical value obtained by performing an operation of modulo a positive integer M on the counter DAI, or, the third counter DAI is equal to a sum of a modulus and y, wherein the modulus is a numerical value obtained by performing an operation of modulo the positive integer M on subtracted counter DAI that is obtained by subtracting y from the counter DAI, and y is a non-negative integer.

3. When the first DCI format and the second DCI format are configured and the bit of the counter DAI is the minimum of the first bit and the second bit, the third counter DAI is equal to a numerical value obtained by performing an operation of modulo a positive integer M on the counter DAI, or, the third counter DAI is equal to a sum of a modulus and y, wherein the modulus is a numerical value obtained by performing an operation of modulo the positive integer M on subtracted counter DAI that is obtained by subtracting y from the counter DAI, and y is a non-negative integer.

4. When the first DCI format and the second DCI format are configured and 2 to a power of the bit of the counter DAI is the greatest common divisor of 2 to a power of the first bit and 2 to a power of the second bit, the third counter DAI is equal to a numerical value obtained by performing an operation of modulo a positive integer M on the counter DAI, or, the third counter DAI is equal to a sum of a modulus and y, wherein the modulus is a numerical value obtained by performing an operation of modulo the positive integer M on subtracted counter DAI that is obtained by subtracting y from the counter DAI, and y is a non-negative integer.

It should be noted that the implementation of the present application only is described by taking the example that, under the above cases, the third counter DAI may be equal to a numerical value obtained by performing an operation of modulo a positive integer M on the counter DAI in the DCI, or the third counter DAI may be equal to a sum of a modulus and y, wherein the modulus is a numerical value obtained by performing an operation of modulo the positive integer M on subtracted counter DAI that is obtained by subtracting y from the counter DAI, and y is a non-negative integer. In another implementation, in any case, the third counter DAI is equal to a numerical value obtained by performing an operation of modulo a positive integer M on the counter DAI in the DCI, or the third counter DAI may be equal to a sum of a modulus and y, wherein the modulus is a numerical value obtained by performing an operation of modulo the positive integer M on subtracted counter DAI that is obtained by subtracting y from the counter DAI, and y is a non-negative integer. Alternatively, when DCI scheduling with the format DCI format 1_2 is adopted, the third counter DAI is equal to a numerical value obtained by performing an operation of modulo a positive integer M on the counter DAI in the DCI, or the third counter DAI may be equal to a sum of a modulus and y, the modulus is a numerical value obtained by performing an operation of modulo the positive integer M on subtracted counter DAI that is obtained by subtracting y from the counter DAI, and y is a non-negative integer. Alternatively, when DCI scheduling in the format of DCI format 1_1 is adopted, the third counter DAI is directly determined by means of indication information.

In act 304, the terminal device determines a position of a HARQ-ACK fed back for PDSCH reception or SPS release, scheduled by DCI, in a HARQ-ACK codebook according to the third counter DAI.

After the terminal device determines the effective bit of the counter DAI field in the DCI, the terminal device determines the third counter DAI according to the bit of the counter DAI field, and then determines a position of a HARQ-ACK fed back for PDSCH reception or SPS release, scheduled by the DCI format, in a HARQ-ACK codebook according to the third counter DAI.

According to the method provided by the implementation of the application, the terminal device receives the DCI, determines the third counter DAI according to the counter DAI field in the DCI, and determines the position of a HARQ-ACK fed back for PDSCH reception or SPS release, scheduled by the DCI, in a HARQ-ACK codebook according to the third counter DAI. Since the terminal device first determines the third counter DAI according to the counter DAI field, even if the bits of different counter DAI fields are different, the counter DAI fields may be converted into a third counter DAI, and then a position of a HARQ-ACK fed back for PDSCH reception or SPS release scheduled by DCI, in a HARQ-ACK codebook is determined according to the third counter DAI, so as to prevent the situation in which the determined position of the HARQ-ACK is wrong due to the different bits of the counter DAIs, thereby ensuring the accuracy of the determined position of the HARQ-ACK.

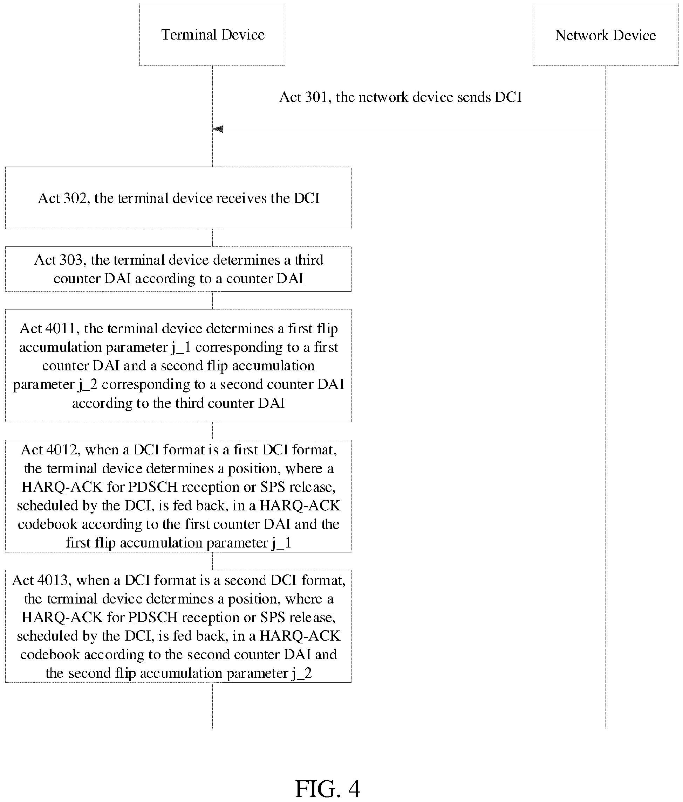

The act 304 shown in FIG. 3 has at least three different calculation manners, which are described as follows using FIG. 4, FIG. 5 and FIG. 6 respectively.

In an alternative implementation based on FIG. 3, FIG. 4 shows a flowchart of a method for indicating a DAI according to an exemplary implementation of the present application. In this implementation, the act 304 may be replaced by an implementation of acts 4011-4013.

In act 4011, the terminal device determines a first flip accumulation parameter j_1 corresponding to the first counter DAI and a second flip accumulation parameter j_2 corresponding to the second counter DAI according to the third counter DAI.

After the terminal device determines the first bit or the second bit of the counter DAI field in different DCIs, different third counter DAIs may be determined according to the first bit or the second bit, and then the first flip accumulation parameter j_1 corresponding to the first counter DAI and the second flip accumulation parameter j_2 corresponding to the second counter DAI may be determined according to the third counter DAI.

In act 4012, when the DCI format is the first DCI format, the terminal device determines a position of a HARQ-ACK fed back for PDSCH reception or SPS release scheduled by DCI, in a HARQ-ACK codebook according to the first counter DAI and the first flip accumulation parameter j_1.

In one possible implementation, the first bit of the first counter DAI field is 1 bit, the third counter DAI is set as the value DAI_1 of the first bit. When the value of the third counter DAI is greater than a value of a third counter DAI last time, the value of the first flip accumulation parameter j_1 corresponding to the first counter DAI is increased by 1. When the value of the third counter DAI is not greater than a value of a third counter DAI last time, j_1 remains unchanged and the position of HARQ-ACK in the HARQ-ACK codebook is calculated as $2*j\_1+DAI\_1$.

DAI_1 represents the value when the first bit of the first counter DAI field is 1 bit. Alternatively, the DAI_1 is determined by the network device according to the number Y of transmissions. For example, $DAI\_1=Ymod2$. When Y is 2, DAI_1 is 0.

In act 4013, when the DCI format is the second DCI format, the terminal device determines a position of a HARQ-ACK fed back for PDSCH reception or SPS release scheduled by DCI, in the HARQ-ACK codebook according to the second counter DAI and the second flip accumulation parameter j_2.

In one possible implementation, the second bit of the second counter DAI field is 2 bits, the third counter DAI is set as MOD (DAI_2, 2), and DAI_2 is the value of the second bit of the second counter DAI field. When the case in which the value of the third counter DAI is greater than a value of a third counter DAI last time occurs twice, the value of the second flip accumulation parameter $j\_2$ corresponding to the second counter DAI field is increased by 1. When the case in which the value of the third counter DAI is not greater than a value of DAI_e last time does not occur twice, the value of $j\_2$ remains unchanged, and the HARQ-ACK bit number in the HARQ-ACK codebook is calculated as $4*j\_2+DAI\_2$.

Herein, DAI_2 is the value of the second bit of the second counter DAI field, and optionally, the DAI_2 is determined by the network device according to the number Y of transmissions. For example, DAI_2=Ymod4. When Y is 2, DAI_2 is 2.

After the value of $j\_2$ this time is determined, the HARQ-ACK bit number in the HARQ-ACK codebook is calculated as $4*j\_2+DAI\_2$. For example, if the value of $j\_2$ is 1 and the value of DAI_2 is 0, the HARQ-ACK bit number is determined to be 4.

Alternatively, taking Table 2 as an example, the acts shown in FIG. 4 are further explained.

Table 2

| | 0 | 1 | 2 | 3 | 4 | 5 | 6 |
|---|---|---|---|---|---|---|---|
| Actual number Y of transmissions | 0 | 1 | 2 | 3 | 4 | 5 | 6 |
| Second counter DAI value (2bits) = Ymod4 | 0 | | 2 | | 0 | | 2 |
| First counter DAI value (1bit) = Ymod2 | | 1 | | 1 | | 1 | |
| The third counter DAI | 0 | 1 | 0 | 1 | 0 | 1 | 0 |
| The second flip accumulation parameter $j\_2$ corresponding to the second counter DAI | 0 | 0 | 0 | 0 | 1 | 1 | 1 |
| The first flip accumulation parameter $j\_1$ corresponding to the first counter DAI field | 0 | 0 | 1 | 1 | 2 | 2 | 3 |
| Position of HARQ-ACK = $4*j\_2+DAI\_2$ | 0 | | 2 | | 4 | | 6 |
| Position of HARQ-ACK = $2*j\_1+DAI\_1$ | | 1 | | 3 | | 5 | |

Referring to Table 2, in a HARQ-ACK codebook window, 7 PDSCH transmissions are included. When the current number of transmissions is 0, the bit of the counter DAI field in the first DCI received by the terminal device is 2 bits, then the value DAI_2 of the counter DAI field is determined to be 0, the MOD (DAI_2, 2) is calculated as 0, the value of the third counter DAI is determined to be 0, and in addition, the third counter DAI last time does not exist, then the determined $j\_2$ is also 0, and the determined position of HRAQ-ACK is 0.

When the current number of transmissions is 1, and the bit of the counter DAI field in the second DCI received by the terminal device is 1 bit, the value DAI_1 of the counter DAI field is determined to be 1. The third counter DAI is set to be the same as DAI_1, the value of the obtained third counter DAI is 1. Optionally, the value of the third counter DAI this time is not less than a value of a third counter DAI last time, so it is determined that $j\_1$ is 0 and $j\_2$ is 0, and the obtained position of the HRAQ-ACK by calculating is 1.

When the current number of transmissions is 2, and the bit of the counter DAI field in the third DCI received by the terminal device is 2 bits, the value DAI_2 of the counter DAI field is determined to be 2. The MOD (DAI_2, 2) is calculated to be 0, the value of the third counter DAI is determined to be 0, and the value of the third counter DAI is less than a value of a third counter DAI last time, but the value of the third counter DAI is less than a value of a third counter DAI last time only once, it is determined that $j\_2$ is 0 and $j\_1$ is 1, and the obtained position of the HRAQ-ACK by calculating is 2.

When the current number of transmissions is 3, and the bit of the counter DAI field in the fourth DCI received by the terminal device is 1 bit, the value DAI_1 of the counter DAI field is determined to be 1. The third counter DAI is set to be the same as DAI_1, the value of the obtained third counter DAI is 1. Optionally, the value of the third counter DAI this time is not less than a value of a third counter DAI last time, so it is determined that $j\_1$ is 1 and $j\_2$ is 0, and the obtained position of the HRAQ-ACK by calculating is 3.

When the current number of transmissions is 4, and the bit of the counter DAI field in the fifth DCI received by the terminal device is 2 bits, the value DAI_2 of the counter DAI field is determined to be 0. The MOD (DAI_2, 2) is calculated as 0, the value of the third counter DAI is determined to be 0, and the value of the third counter DAI this time is less than a value of a third counter DAI last time, and the value of the third counter DAI is less than a value of a third counter DAI last time for twice, it is determined that $j\_2$ is 1 and $j\_1$ is 2, and the obtained position of the HRAQ-ACK by calculating is 4.

When the current number of transmissions is 5, and the bit of the counter DAI field in the sixth DCI received by the terminal device is 1 bit, the value DAI_1 of the counter DAI field is determined to be 1. The third counter DAI is set to be the same as DAI_1, the value of the obtained third counter DAI is 1. Optionally, the value of the third counter DAI this time is not less than a value of a third counter DAI last time, so it is determined that $j\_1$ is 2 and $j\_2$ is 0, and the obtained position of the HRAQ-ACK by calculating is 5.

When the current number of transmissions is 6, and the bit of the counter DAI field in the seventh DCI received by the terminal device is 2 bits, the value DAI_2 of the counter DAI field is determined to be 2. The MOD (DAI_2, 2) is calculated as 0, the value of the third counter DAI is determined to be 0, and the value of the third counter DAI this time is determined to be less than a value of a third counter DAI last time, and the value of the third counter DAI is less than a value of a third counter DAI last time once, it is determined that j_2 is 1, and j_1 is 3, and the obtained position of the HRAQ-ACK by calculating is 6.

In a HARQ-ACK codebook window, the HARQ-ACK positions determined in turn are 0, 1, 2, 3, 4, 5 and 6, respectively, which are the same as the position numbers of the PDSCH transmissions.

It should be noted that the implementation of the present application is only described by taking DAI_1, DAI_2, j_1 and j_2 as an example. In another implementation, the values are not limited to DAI_1, DAI_2, j_1 and j_2, and may be expressed in other ways.

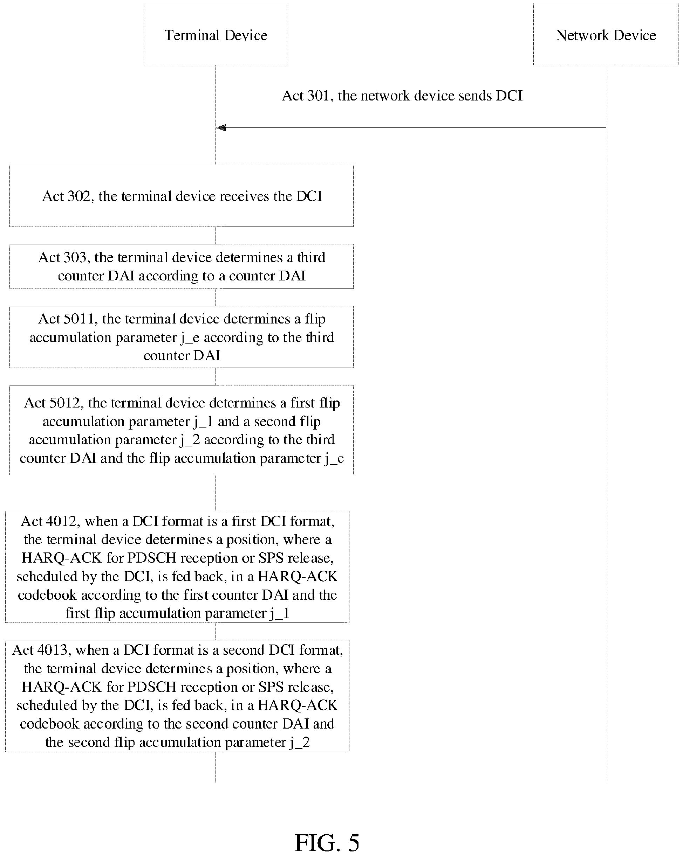

In an alternative implementation based on FIG. 4, FIG. 5 shows a flowchart of a method for indicating a DAI according to an exemplary implementation of the present application. In this implementation, the act 4011 may be replaced by an implementation of acts 5011-5012.

In act 5011, the terminal device determines a flip accumulation parameter j_e according to the third counter DAI.

In act 5012, the terminal device determines a first flip accumulation parameter j_1 and a second flip accumulation parameter j_2 according to the third counter DAI and the flip accumulation parameter j_e.

In one possible implementation, the flip accumulation parameter j_e is cumulatively increased when the third counter DAI is less than the third parameter.

Herein, the third parameter is a positive integer. For example, the third parameter may be 1, 2, 3 or other values.

For example, when the third parameter is 2 and the determined third counter DAI first time is 1, which is less than the third parameter, the flip accumulation parameter j_e is cumulatively increased, and j_e is 2. When the third counter DAI determined second time is 4, which is greater than the third parameter, the flip accumulation parameter j_e is not cumulatively increased, and j_e is 1.

Optionally, the third parameter includes a historical third counter DAI.

After each determination of the third counter DAI, the third counter DAI determined at last time is taken as the third parameter, the third counter DAI determined this time is compared with the third counter DAI determined at last time, and whether the third counter DAI determined this time is smaller than the third counter DAI determined at last time is determined, thereby whether the flip accumulation parameter j_e is cumulatively increased is determined.

Optionally, the third parameter may also include a maximum of multiple values of the third counter DAI.

For example, when three third counter DAIs are determined to be 1, 2, 4, respectively, the third parameter is determined to be the maximum 4 among the third counter DAIs, each determined third counter DAI is subsequently compared with the third parameter 4, whether the third counter DAI is smaller than the third parameter each time is determined, and the flip accumulation parameter j_e is cumulatively increased.

In one possible implementation, when the first bit of the first counter DAI field is 1 bit, the third counter DAI is set as the value DAI_1 of the first bit of the first counter DAI field. When the value of the third counter DAI is less than a value of a third counter DAI last time, the value of the flip accumulation parameter j_e is increased by 1. When the value of the third counter DAI is not less than a value of a third counter DAI last time, j_c remains unchanged, and the first flip accumulation parameter j_1 corresponding to the first counter DAI field is set to be the same as j_e, and the position of the HARQ-ACK in the HARQ-ACK codebook is calculated as 2*j_1+DAI_1.

DAI_1 represents the value when the first bit of the first counter DAI field is 1 bit. Alternatively, the DAI_1 is determined by the network device according to the number Y of transmissions. For example, DAI_1=Ymod2. When Y is 2, DAI_1 is 0.

For example, when the third counter DAI is determined to be 0 this time, the value of the third counter DAI determined last time is 1, and the value of j_e determined last time is 0, the value of j_e determined this time is 1. When the value of the third counter DAI determined this time is not less than the value of the third counter DAI determined last time, the value of j_e remains unchanged, that is, the value of j_e this time is the same as that of j_e last time.

After the cumulative number of flips j_e is determined according to the third counter DAI, the value of j_1 is set to be the same as that of j_e. In this case, the position of the HARQ-ACK in the HARQ-ACK codebook may be calculated as 2*j_1+DAI_1 based on the determined j_1 and the first bit of the first counter DAI field.

For example, when j_1 is determined to be 1 and DAI_1 is determined to be 1 this time, the position of the HARQ-ACK is determined to be 3.

In another possible implementation, the second bit of the second counter DAI field is 2 bits, and the third counter DAI is set to be MOD (DAI_2, 2). When the value of the third counter DAI is less than a value of a third counter DAI last time, the value of the flip accumulation parameter j_e is increased by 1. When the value of the third counter DAI is not less than a value of a third counter DAI last time, j_e remains unchanged. When j_e is changed from odd to even, or the value of j_e is flipped twice, the value of the second flip accumulation parameter j_2 corresponding to the second counter DAI field is increased by 1, and the position of the HARQ-ACK in the HARQ-ACK codebook is calculated as $4*j\_2+DAI\_2$.

Herein, DAI_2 is the value of the second bit of the second counter DAI field, and optionally, the DAI_2 is determined by the network device according to the number Y of transmissions. For example, DAI_2=Ymod4. When Y is 2, DAI_2 is 2.

For example, when the value of j_e is 2 this time, while the value of j_e is 1 last time and the value of j_2 is 1, it is determined that the value of j_2 is increased by 1 to obtain the value of j_2 as 2.

After the value of j_2 is determined this time, the position of the HARQ-ACK in a HARQ-ACK codebook is calculated as $4*j\_2+DAI\_2$. For example, if the value of j_2 is 1 and the value of DAI_2 is 0, the bit number of the HARQ-ACK is determined to be 4.

Alternatively, taking Table 3 as an example, the acts shown in FIG. 5 are further explained.

Table 3

| | 0 | 1 | 2 | 3 | 4 | 5 | 6 |
|---|---|---|---|---|---|---|---|
| Actual number Y of transmissions | 0 | 1 | 2 | 3 | 4 | 5 | 6 |
| Second counter DAI (2bits) = Ymod4 | 0 | | 2 | | 0 | | 2 |
| First counter DAI value (1bit) = Ymod2 | | 1 | | 1 | | 1 | |
| The third counter DAI | 0 | 1 | 0 | 1 | 0 | 1 | 0 |
| Flip accumulation parameter j_e | 0 | 0 | 1 | 1 | 2 | 2 | 3 |
| The second flip accumulation parameter j_2 corresponding to the second counter DAI | 0 | 0 | 0 | 0 | 1 | 1 | 1 |
| The first flip accumulation parameter j_1 corresponding to the first counter DAI field | 0 | 0 | 1 | 1 | 2 | 2 | 3 |
| Position of HARQ-ACK = 4*j_2+DAI_2 | 0 | | 2 | | 4 | | 6 |
| Position of HARQ-ACK = 2*j_1+DAI_1 | | 1 | | 3 | | 5 | |

Referring to Table 3, in a HARQ-ACK codebook window, 7 PDSCH transmissions are included. When the current number of transmissions is 0, the bit of the counter DAI field in the first DCI received by the terminal device is 2 bits, then the value DAI_2 of the counter DAI field is determined to be 0, the MOD (DAI_2, 2) is calculated to be 0, the value of the third counter DAI is determined to be 0, and the last third counter DAI does not exist, then the determined j_2 is 0, in addition, the last j_e does not exist, the determined j_2 is also 0, and the determined position of the HRAQ-ACK is 0.

When the current number of transmissions is 1, and the bit of the counter DAI field in the second DCI received by the terminal device is 1 bit, the value DAI_1 of the counter DAI field is determined to be 1. The third counter DAI is set to be the same as DAI_1, the value of the obtained third counter DAI is 1. Optionally, the value of the third counter DAI this time is not less than the value of the last third counter DAI, so it is determined that j_e is 0, j_1 is set to be the same as j_e, the value of j_1 is also 0, and the obtained position of the HRAQ-ACK by calculating is 1.

When the current number of transmissions is 2, and the bit of the counter DAI field in the third DCI received by the terminal device is 2 bits, the value DAI_2 of the counter DAI field is determined to be 2. The MOD (DAI_2, 2) is calculated to be 0, the value of the third counter DAI is determined to be 0, and the value of the third counter DAI this time is less than a value of a third counter DAI last time, the determined j_e is 1, and the current j_e changes from 0 to 1, it is determined that j_2 is 0 and j_1 is 1, and the determined position of the HRAQ-ACK is 2.

When the current number of transmissions is 3, and the bit of the counter DAI field in the fourth DCI received by the terminal device is 1 bit, the value DAI_1 of the counter DAI field is determined to be 1. The third counter DAI is set to be the same as DAI_1, the value of the obtained third counter DAI is 1. Optionally, the value of the third counter DAI this time is not less than the value of the last third counter DAI, so it is determined that j_e is 0, j_1 is set to be the same as j_e, the value of j_1 is also 0, the value of j_2 is 0, and the obtained position of the HRAQ-ACK by calculating is 3.

When the current number of transmissions is 4, and the bit of the counter DAI field in the fifth DCI received by the terminal device is 2 bits, the value DAI_2 of the counter DAI field is determined to be 0. The MOD (DAI_2, 2) is calculated to be 0, the value of the third counter DAI is determined to be 0, and the value of the third counter DAI this time is less than a value of a third counter DAI last time, the determined j_e is 2, and the j_e this time changes from 1 to 2, it is determined that j_2 is 1 and j_1 is 2, and the determined position of the HRAQ-ACK is 4.

When the current number of transmissions is 5, and the bit of the counter DAI field in the sixth DCI received by the terminal device is 1 bit, the value DAI_1 of the counter DAI field is determined to be 1. The third counter DAI is set to be the same as DAI_1, the value of the obtained third counter DAI is 1. Optionally, the value of the third counter DAI this time is not less than the value of the last third counter DAI, so it is determined that j_e is 2, j_1 is set to be the same as j_e, the value of j_1 is also 2, the value of j_2 is 1, and the obtained position of the HRAQ-ACK by calculating is 5.

When the current number of transmissions is 6, and the bit of the counter DAI field in the seventh DCI received by the terminal device is 2 bits, the value DAI_2 of the counter DAI field is determined to be 2. The MOD (DAI_2, 2) is calculated to be 0, the value of the third counter DAI is determined to be 0, and the value of the third counter DAI this time is less than a value of a third counter DAI last time, the determined j_e is 3, and the j_e this time changes from 2 to 3, it is determined that j_2 is 1 and j_1 is 3, and the determined HRAQ-ACK position is 6.

In a HARQ-ACK codebook window, the bit numbers of the HARQ-ACKs sequentially determined are 0, 1, 2, 3, 4, 5 and 6, respectively, which are the same as the position numbers of PDSCH transmissions.

It should be noted that the implementation of the present application is only described by taking j_e, DAI_1, DAI_2, j_1 and j_2 as an example. In another implementation, the values are not limited to j_e, DAI_1, DAI_2, j_1 and j_2, and may be expressed in other ways.

In an alternative implementation based on FIG. 3, FIG. 6 shows a flowchart of a method for indicating a DAI according to an exemplary implementation of the present application. In this implementation, the act 304 may be replaced by an implementation of acts 6011-6012.

In act 6011, a flip accumulation parameter j_e is determined according to the third counter DAI.

In one possible implementation, the flip accumulation parameter j_e is cumulatively increased when the third counter DAI is less than the third parameter, which is a positive integer.

Optionally, the third parameter includes a historical third counter DAI, or the third parameter includes a maximum of multiple values of the third counter DAI.

The procedure of act 6011 is similar to the procedure of 5011 and will not be described here.

In act 6012, according to the third counter DAI and the flip accumulation parameter j_e, the position of the HARQ-ACK fed back for PDSCH reception or SPS release, scheduled by the DCI, in the HARQ-ACK codebook is determined.

In one possible implementation, the first bit of the first counter DAI field is 1 bit, the third counter DAI is set as the value DAI_1 of the effective bit of the first counter DAI field. When the value of the third counter DAI is less than a value of a third counter DAI last time, the value of j_e is increased by 1. When the value of the third counter DAI is not less than the value of the last third counter DAI, the value of j_e remains unchanged, and the position of the HARQ-ACK in the HARQ-ACK codebook is calculated as X_e*j_e+DAI_e.

Here X_e is the number of values of the third counter DAI. For example, the X_e may be the greatest common divisor of 2 to a power of the first bit and 2 to a power of the second bit.

In another possible implementation, the second bit of the second counter DAI field is 2 bits, the third counter DAI is set as MOD (DAI_2, 2), and DAI_2 is the value of the second bit of the second counter DAI field. When the value of the third counter DAI is less than a value of a third counter DAI last time, the value of j_e is increased by 1. When the value of the third counter DAI is not less than the value of the last third counter DAI, the value of j_e remains unchanged, and the position of the HARQ-ACK in the HARQ-ACK codebook is calculated as X_e*j_e+DAI_e.

Here X_e is the number of values of the third counter DAI.

Taking Table 4 as an example, the acts shown in FIG. 6 are further explained.

Table 4

| Actual number Y of transmissions | 0 | 1 | 2 | 3 | 4 | 5 | 6 |
|---|---|---|---|---|---|---|---|
| Second counter DAI value (2bits) = Ymod4 | 0 | | 2 | | 0 | | 2 |
| First counter DAI value (1bit) = Ymod2 | | 1 | | 1 | | 1 | |
| Third counter DAI | 0 | 1 | 0 | 1 | 0 | 1 | 0 |
| Flip accumulation parameter j_e | 0 | 0 | 1 | 1 | 2 | 2 | 3 |
| Position of HARQ-ACK = X_e*j_e+DAI_e | 0 | 1 | 2 | 3 | 4 | 5 | 6 |

Referring to Table 4, in a HARQ-ACK codebook window, 7 PDSCH transmissions are included. When the current number of transmissions is 0, the bit of the counter DAI field in the first DCI received by the terminal device is 2 bits, then the value DAI_2 of the counter DAI field is determined to be 0, the MOD (DAI_2, 2) is calculated to be 0, then the third counter DAI is determined to be 0, and the last third counter DAI does not exist, the determined j_2 is 0, then the determined position of the HRAQ-ACK is 0.

When the current number of transmissions is 1, and the bit of the counter DAI field in the second DCI received by the terminal device is 1 bit, the value DAI_1 of the counter DAI field is determined to be 1. The third counter DAI is set to be the same as DAI_1, the value of the obtained third counter DAI is 1. Optionally, the value of the third counter DAI this time is not less than the value of the last third counter DAI, the j_e is determined to be 0, and the determined position of the HRAQ-ACK is 1.

When the current number of transmissions is 2, the bit of the counter DAI field in the third DCI received by the terminal device is 2 bits, then the value DAI_2 of the counter DAI field is determined to be 2. The MOD (DAI_2, 2) is calculated to be 0, the third counter DAI is determined to be 0, and the third counter DAI this time is 0, which is less than a value 1 of a third counter DAI last time. The value of j_e is increased by 1, so that the value of the obtained j_e is 1, and the determined position of the HRAQ-ACK is 2.

When the current number of transmissions is 3, and the bit of the counter DAI field in the fourth DCI received by the terminal device is 1 bit, the value DAI_1 of the counter DAI field is determined to be 1. The third counter DAI is set to be the same as DAI_1, the value of the obtained third counter DAI is 1. Optionally, the value of the third counter DAI this time is not less than the value of the last third counter DAI, the j_e is determined to be 1, the determined position of the HRAQ-ACK is 3.

When the current number of transmissions is 4, the bit of the counter DAI field in the fifth DCI received by the terminal device is 2 bits, then the value DAI_2 of the counter DAI field is determined to be 0, the MOD (DAI_2, 2) is calculated to be 0, and the third counter DAI is determined to be 0. The third counter DAI this time is 0, which is less than a value 1 of a third counter DAI last time. The value of j_e is increased by 1, and the value of the obtained j_e is 2, and the determined position of the HRAQ-ACK is 4.

When the current number of transmissions is 5, and the bit of the counter DAI field in the sixth DCI received by the terminal device is 1 bit, the value DAI_1 of the counter DAI field is determined to be 1. The third counter DAI is set to be the same as DAI_1, the value of the obtained third counter DAI is 1. Optionally, the value of the third counter DAI this time is not less than the value of the last third counter DAI, the j_e is determined to be 2, the determined position of the HRAQ-ACK is 5.

When the current number of transmissions is 6, the bit of the counter DAI field in the seventh DCI received by the terminal device is 2 bits, the value DAI_2 of the counter DAI field is determined to be 2, the MOD (DAI_2, 2) is calculated to be 0, and the third counter DAI is determined to be 0, and the third counter DAI this time is 0, which is less than a value 1 of a third counter DAI last time, the value of j_e is increased by 1, the value of the obtained j_e is 3, and the determined position of the HRAQ-ACK is 6.

In a HARQ-ACK codebook window, the positions of HARQ-ACKs determined in turn are 0, 1, 2, 3, 4, 5 and 6, respectively, which are the same as the position numbers of PDSCH transmissions.

Alternatively, a process of the calculation manner shown in Table 4 is as follows.

In a schematic expression, $V_{\mathrm{C-DAI},c,m}^{\mathrm{DL}}-1$ is used to denote the value of the counter DAI scheduling PDSCH reception or SPS PDSCH release on the serving cell c in PDCCH monitoring occasion m when the counter DAI is 1 bit in a DCI format. $V_{\mathrm{C-DAI},c,m}^{\mathrm{DL}}-2$ is used to denote the value of the counter DAI scheduling PDSCH reception or SPS PDSCH release on the serving cell c in PDCCH monitoring occasion m when the counter DAI is 2 bit in a DCI format.

In PDCCH monitoring occasion m, $V_{\mathrm{T-DAI},m}^{\mathrm{DL}}$ is used to denote the equivalent value of the total DAI in a DCI format. In PDCCH monitoring occasion m, $V_{\mathrm{T-DAI},m}^{\mathrm{DL}}-1$ is used to denote the value of the total DAI of 1 bit in a DCI format. In PDCCH monitoring occasion m, $V_{\mathrm{T-DAI},m}^{\mathrm{DL}}-2$ is used to denote the value of the total DAI of 2 bits in a DCI format. In PDCCH monitoring occasion m, the terminal assumes that the values of the total DAIs in all DCI formats are the same.

In another schematic expression, the $N_{c-\mathrm{DAI}}^{\mathrm{DL}}$ is used to denote the minimum bit number of the counter DAI, and $T_D = 2^{N_{c-\mathrm{DAI}}^{\mathrm{DL}}} \cdot V_{\mathrm{C-DAI},c,m}^{\mathrm{DL}}\_\mathrm{temp}$ is used to denote an actual value of the counter DAI, i.e., the first counter DAI or the second counter DAI, in a DCI format scheduling PDSCH reception or SPS PDSCH release on the serving cell c in PDCCH monitoring occasion m . In PDCCH monitoring occasion m, $V_{\mathrm{T-DAI},m}^{\mathrm{DL}}\_\mathrm{temp}$ is used to denote an actual value of the total DAI in a DCI format.

In another schematic expression, $N_{c-\mathrm{DAI}}^{\mathrm{DL}}\text{-}i$ is used to denote the bit number of the i-th counter DAI, and

$$T_D = \mathrm{greatest\ common\ divisor}(2^{N_{c-\mathrm{DAI},0}^{\mathrm{DL}}}, \dots, 2^{N_{c-\mathrm{DAI},i}^{\mathrm{DL}}}, \dots, 2^{N_{c-\mathrm{DAI},\mathrm{I}}^{\mathrm{DL}}}).$$

If the terminal sends HARQ-ACK information in a PUCCH in slot n, and for any PUCCH format, the terminal determines $\tilde{o}_0^{ACK}, \tilde{o}_1^{ACK}, ..., \tilde{o}_{O^{ACK}-1}^{ACK}$ for a total number of $O_{ACK}$ HARQ-ACK information bits, based on the following pseudocode.

Set m=0 - PDCCH with DCI format scheduling PDSCH reception or SPS PDSCH release monitoring occasion index: lower index corresponds to earlier PDCCH monitoring occasion;

Set j=0

Set $V_{temp} = 0$

Set $V_{temp2} = 0$

Set $V_s = \varnothing$

Set $N_{cells}^{DL}$ to the number of serving cells configured by higher layers for the terminal;

Set M to the number of PDCCH monitoring occasion(s);

While m < M

 Set c=0 - serving cell index: lower indexes correspond to lower RRC indexes of

  corresponding cell;

 while $c < N_{cells}^{DL}$

 if PDCCH monitoring occasion m is before an active DL (DownLink) BWP (Band Width Part) change on the serving cell c or an active DL BWP change on the PCell and an active UL BWP change is not triggered by the DCI format 1_1 in the PDCCH monitoring occasion m;

  c = c + 1

 else

  if there is a PDSCH on the serving cell c associated with the PDCCH in the PDCCH monitoring occasion m, or there is a PDCCH indicating downlink SPS release on the serving cell c;

  if the number of bits for the counter DAI in the PDCCH is 1 bit;

$$V_{C-DAI,c,m}^{DL} = V_{C-DAI,c,m}^{DL} - 1$$

  else

$$V_{C-DAI,c,m}^{DL} = \mathrm{mod}(V_{C-DAI,c,m}^{DL} - 2, 2)$$

  end

  if the number of bits for the total DAI in the PDCCH is 1 bit;

$$V_{\text{T-DAI},m}^{\text{DL}} = V_{\text{T-DAI},m}^{\text{DL}} - 1$$

else

$$V_{\text{T-DAI},m}^{\text{DL}} = \text{mod}(V_{\text{T-DAI},m}^{\text{DL}} - 2, 2);$$

end

if $V_{\text{C-DAI},c,m}^{\text{DL}} \leq V_{temp}$

$$j = j + 1$$

end

$$V_{temp} = V_{\text{C-DAI},c,m}^{\text{DL}}$$

if $V_{\text{T-DAI},m}^{\text{DL}} = \varnothing$

$$V_{temp2} = V_{\text{C-DAI},c,m}^{\text{DL}}$$

else

$$V_{temp2} = V_{\text{T-DAI},m}^{\text{DL}}$$

end

if a higher layer parameter HARQ-ACK-SpatialBundlingPUCCH is not provided, the terminal is configured by a higher layer parameter maxNrofCodeWordsScheduledByDCI, wherein two transport blocks for at least one configured DL BWP of at least one serving cell are received;

$$\tilde{o}_{2 \cdot T_D \cdot j + 2(V_{C-DAI,c,m}^{DL} - 1)}^{ACK} = \text{HARQ-ACK information bit}$$

corresponding to the first transport block of this cell;

$$\tilde{o}_{2 \cdot T_D \cdot j + 2(V_{C-DAI,c,m}^{DL} - 1) + 1}^{ACK} = \text{HARQ-ACK information bit}$$

corresponding to the second transport block of this cell;

$$V_s = V_s \cup \{2 \cdot T_D \cdot j + 2(V_{\text{C-DAI},c,m}^{\text{DL}} - 1),\ 2 \cdot T_D \cdot j + 2(V_{\text{C-DAI},c,m}^{\text{DL}} - 1) + 1\};$$

elseif the higher layer parameter HARQ-ACK-SpatialBundlingPUCCH is provided, the terminal is configured by the higher layer parameter maxNrofCodeWordsScheduledByDCI, wherein two transport blocks are received in at least one configured DL BWP of the serving cell;

$\tilde{o}^{ACK}_{T_D \cdot j + V^{\mathrm{DL}}_{C-\mathrm{DAI},c,m}-1}$ = binary AND operation of the HARQ-ACK information bits corresponding to the first and second transport blocks of this cell;

$$V_s = V_s \cup \left\{ T_D \cdot j + V^{\mathrm{DL}}_{C-\mathrm{DAI},c,m} - 1 \right\}$$

else

$\tilde{o}^{ACK}_{T_D \cdot j + V^{\mathrm{DL}}_{C-DAI,c,m}-1}$ = HARQ-ACK information bits of this cell;

$$V_s = V_s \cup \left\{ T_D \cdot j + V^{\mathrm{DL}}_{C-\mathrm{DAI},c,m} - 1 \right\}$$

          end if

        end if

      c = c + 1

    end if

  end

  m=m+1

end

if $V_{temp2} < V_{temp}$

  j=j+1

end if

if the higher layer parameter harq-ACK-SpatialBundlingPUCCH is not provided, and the UE is configured by the higher layer parameter maxNrofCodeWordsScheduledByDCI, wherein two transport blocks are received in at least one configured DL BWP of the serving cell;

$$O^{ACK} = 2 \cdot \left( T_D \cdot j + V_{temp2} \right)$$

else

$$O^{ACK} = T_D \cdot j + V_{temp2}$$

end if

$\tilde{o}^{ACK}_i = \mathrm{NACK}$ for any $i \in \left\{0,1,...,O^{ACK}-1\right\} \backslash V_s$

Set $c=0$

while $c < N_{\text{cells}}^{\text{DL}}$

if SPS PDSCH transmission is activated for the terminal and the terminal is configured to receive SPS PDSCH in a slot $n - K_{1,c}$ for the serving cell, wherein, $K_{1,c}$ is the PDSCH to HARQ feedback timing value for SPS PDSCH;

$O^{ACK} = O^{ACK} + 1$;

$o_{O^{ACK}-1}^{ACK} =$ HARQ-ACK information bit associated with SPS PDSCH reception;

end if

$c = c + 1$

end while

It should be noted that, $V_{\text{C-DAI},c,m}^{\text{DL}} = \text{mod} (V_{\text{C-DAI},c,m}^{\text{DL}} - 2, 2)$ is applicable to a counter DAI counting from 0. If a counter DAI counts from 1, it needs to be revised to $V_{\text{C-DAI},c,m}^{\text{DL}} = \text{mod} (V_{\text{C-DAI},c,m}^{\text{DL}} - 2 - 1, 2) + 1$. Similarly, $V_{\text{T-DAI},m}^{\text{DL}} = \text{mod} (V_{\text{T-DAI},m}^{\text{DL}} - 2, 2)$ is applicable to a total DAI counting from 0. If a total DAI counts from 1, it needs to be revised to $V_{\text{T-DAI},m}^{\text{DL}} = \text{mod} (V_{\text{T-DAI},m}^{\text{DL}} - 2 - 1, 2) + 1$.

Alternatively, a process of the calculation manner shown in Table 4 may also be expressed as follows.

In a schematic expression, $N_{C-\text{DAI},1}^{\text{DL}}$ is used to denote the bits of counter DAI in DCI format 1_1 and $N_{C-\text{DAI},2}^{\text{DL}}$ is used to denote the bits of counter DAI in DCI format 1_2. Set $T_D = 2^{N_{C-\text{DAI},2}^{\text{DL}}}$, otherwise $T_D = 2^{N_{C-\text{DAI},1}^{\text{DL}}}$.

Specifically, if the DCI format 1_2 is configured, set $T_D = 2^{N_{C-\text{DAI},2}^{\text{DL}}}$, otherwise $T_D = 2^{N_{C-\text{DAI},1}^{\text{DL}}}$. $v_{C-\text{DAI},c,m}^{\text{DL}}\text{-temp}$ is used to denote the value of the counter DAI in the DCI format scheduling PDSCH reception or SPS PDSCH release on the serving cell c in PDCCH monitoring occasion m. In PDCCH monitoring occasion m, $v_{T-\text{DAI},c,m}^{\text{DL}}\text{-temp}$ is used to denote the value of the total DAI in a DCI format.

In another schematic expression, $N_{C-\text{DAI}}^{\text{DL}}$ is used to denote the minimum bit number of the counter DAI, and $T_D = 2^{N_{C-\text{DAI}}^{\text{DL}}}$. $V_{\text{C-DAI},c,m}^{\text{DL}}\_\text{temp}$ is used to denote an actual value of the counter DAI, i.e., the first counter DAI or the second counter DAI, in a DCI format scheduling PDSCH reception or SPS PDSCH release on the serving cell c in PDCCH monitoring occasion m. In PDCCH monitoring opportunity m, $V_{\text{T-DAI},m}^{\text{DL}}\text{-temp}$ is used to denote an actual value of the total DAI in a DCI format.

In another schematic expression, $N_{C-\text{DAI}}^{\text{DL}}\text{-i}$ is used to denote the bit number of the i-th counter DAI, and

$$T_D \; T_D = \text{greatest common divisor}(2^{N^{\text{DL}}_{C-\text{DAI},0}}, \dots, 2^{N^{\text{DL}}_{C-\text{DAI},i}}, \dots, 2^{N^{\text{DL}}_{C-\text{DAI},I}}).$$

. If the terminal sends HARQ-ACK information in a PUCCH in slot n, and for any PUCCH format, the terminal determines $\tilde{o}^{ACK}_0, \tilde{o}^{ACK}_1, \dots, \tilde{o}^{ACK}_{O^{ACK}-1}$, for a total number of $O_{\text{ACK}}$ HARQ-ACK information bits, based on the following pseudocode.

Set m=0 - PDCCH with DCI format scheduling PDSCH reception or SPS PDSCH release monitoring occasion index: lower index corresponds to earlier PDCCH monitoring occasion;

Set j=0

Set $V_{temp} = 0$

Set $V_{temp2} = 0$

Set $V_s = \varnothing$

Set $N^{\text{DL}}_{\text{cells}}$ to the number of serving cells configured by higher layers for the terminal;

Set M to the number of PDCCH monitoring occasion(s);

While m < M

    Set c=0 - serving cell index: lower indexes correspond to lower RRC indexes of corresponding cell;

    while $c < N^{\text{DL}}_{\text{cells}}$

    if PDCCH monitoring occasion m is before an active DL (DownLink) BWP (Band Width Part) change on the serving cell c or an active DL BWP change on the PCell and an active UL BWP change is not triggered by the DCI format 1_1 in the PDCCH monitoring occasion m;

        c = c + 1

else

if there is a PDSCH on the serving cell c associated with the PDCCH in the PDCCH monitoring occasion m, or there is a PDCCH indicating downlink SPS release on the serving cell c;

$$V_{\text{C-DAI},c,m}^{\text{DL}} = \text{mod}\ (v_{C\text{-DAI},c,m}^{\text{DL}}\text{-temp},\ T_D);$$

$$V_{\text{T-DAI},m}^{\text{DL}} = \text{mod}\ (v_{T\text{-DAI},c,m}^{\text{DL}}\text{-temp},\ T_D);$$

if $V_{\text{C-DAI},c,m}^{\text{DL}} \leq V_{temp}$

$$j = j+1$$

end

$$V_{temp} = V_{\text{C-DAI},c,m}^{\text{DL}}$$

if $V_{\text{T-DAI},m}^{\text{DL}} = \varnothing$

$$V_{temp2} = V_{\text{C-DAI},c,m}^{\text{DL}}$$

else

$$V_{temp2} = V_{\text{T-DAI},m}^{\text{DL}}$$

end

if a higher layer parameter HARQ-ACK-SpatialBundlingPUCCH is not provided, the terminal is configured by a higher layer parameter maxNrofCodeWordsScheduledByDCI, wherein two transport blocks for at least one configured DL BWP of at least one serving cell are received;

$$\tilde{o}_{2 \cdot T_D \cdot j + 2\left(v_{C\text{-}DAI,c,m}^{DL}-1\right)}^{ACK} = \text{HARQ-ACK information bit}$$

corresponding to the first transport block of this cell;

$$\tilde{o}_{2 \cdot T_D \cdot j + 2\left(v_{C\text{-}DAI,c,m}^{DL}-1\right)+1}^{ACK} = \text{HARQ-ACK information bit}$$

corresponding to the first transport block of this cell;

$$V_s = V_s \cup \left\{2 \cdot T_D \cdot j + 2\left(V_{C\text{-DAI},c,m}^{\text{DL}} - 1\right),\ 2 \cdot T_D \cdot j + 2\left(V_{C\text{-DAI},c,m}^{\text{DL}} - 1\right) + 1\right\};$$

elseif the higher layer parameter HARQ-ACK-SpatialBundlingPUCCH

is provided, the terminal is configured by the higher layer parameter maxNrofCodeWordsScheduledByDCI, wherein two transport blocks are received in at least one configured DL BWP of the serving cell;

$\tilde{o}^{ACK}_{T_D \cdot j + V^{DL}_{C-DAI,c,m} - 1}$ = binary AND operation of the HARQ-ACK information bits corresponding to the first and second transport blocks of this cell;

$$V_s = V_s \cup \{T_D \cdot j + V^{DL}_{C-DAI,c,m} - 1\};$$

else

$\tilde{o}^{ACK}_{T_D \cdot j + V^{DL}_{C-DAI,c,m} - 1}$ = HARQ-ACK information bits of this cell;

$$V_s = V_s \cup \{T_D \cdot j + V^{DL}_{C-DAI,c,m} - 1\};$$

end if

end if

c = c + 1

end if

end

m=m+1;

end

if $V_{temp2} < V_{temp}$

j=j+1

end if

if the higher layer parameter harq-ACK-SpatialBundlingPUCCH is not provided, and the UE is configured by the higher layer parameter maxNrofCodeWordsScheduledByDCI, wherein two transport blocks are received in at least one configured DL BWP of the serving cell;

$$O^{ACK} = 2 \cdot (T_D \cdot j + V_{temp2});$$

else

$$O^{ACK} = T_D \cdot j + V_{temp2};$$

end if

$$\tilde{o}_i^{ACK} = \text{NACK} \quad \text{for any} \quad i \in \left\{0,1,\dots, O^{ACK} -1\right\} \backslash V_s$$

Set $c = 0$

while $c < N_{\text{cells}}^{\text{DL}}$

if SPS PDSCH transmission is activated for the terminal and the terminal is configured to receive SPS PDSCH in a slot $n - K_{1,c}$ of the serving cell, wherein, $K_{1,c}$ is the PDSCH to HARQ feedback timing value for SPS PDSCH;

$$O^{ACK} = O^{ACK} +1 ;$$

$o_{O^{ACK}-1}^{ACK} =$ HARQ-ACK information bit associated with SPS PDSCH reception;

end if

$c = c + 1$

end while

In the above implementation, $V_{\text{C-DAI},c,m}^{\text{DL}} = \text{mod} \ (v_{C-\text{DAI},c,m}^{\text{DL}}\text{-temp}, T_D), \ V_{\text{T-DAI},m}^{\text{DL}} = \text{mod} \ (v_{T-\text{DAI},c,m}^{\text{DL}}\text{-temp}, T_D)$, which are usually used in the counter DAI or total DAI that counts from 0. When the counter DAI or total DAI counts from y, the formulas need to be revised, that is, $V_{\text{C-DAI},c,m}^{\text{DL}} = \text{mod} \ (v_{C-\text{DAI},c,m}^{\text{DL}}\text{-temp-y}, T_D) + y, \ V_{\text{T-DAI},m}^{\text{DL}} = \text{mod} \ (v_{T-\text{DAI},c,m}^{\text{DL}}\text{-temp-y}, T_D) + y$. Specifically, when the counter DAI or the total DAI counts from 1, the formulas need to be revised, that is, $V_{\text{C-DAI},c,m}^{\text{DL}} = \text{mod} \ ( v_{C-\text{DAI},c,m}^{\text{DL}} \text{-temp-1}, T_D ) +1 ; \ V_{\text{T-DAI},m}^{\text{DL}} = \text{mod} \ (v_{T-\text{DAI},c,m}^{\text{DL}}\text{-temp-1}, T ) +1$.

A first point to be noted is that the above-described implementations can be freely combined and a manner in which the implementations are combined is not limited in the present application.

A second point to be noted is that the first DCI format further includes a first total DAI, and the first DCI format includes a third bit of the first total DAI; the second DCI format further includes a second total DAI, the second DCI format includes a fourth bit of the second total DAI, and the third bit and the fourth bit are independently configured.

In the present application, the third total DAI may also be determined according to the total DAI in the DCI, and the first bit of the first counter DAI field is replaced with the third bit of the first total DAI, and the second bit of the second counter DAI field is replaced with the fourth bit of the second total DAI. Subsequently, the third total DAI may be determined according to the act of determining the third counter DAI.

Alternatively, the third total DAI may be equal to the total DAI in the DCI, or the third total DAI may be equal to a numerical value obtained by performing an operation of modulo a positive integer M on on the total DAI in the DCI.

In one possible implementation, the positive integer M is the minimum of the third and fourth parameters.

In another possible implementation, the positive integer M is the greatest common divisor of the third parameter and the fourth parameter.

Herein, the third parameter is determined by the third bit and the fourth parameter is determined by the fourth bit.

Optionally, the third parameter is equal to 2 to a power of the third bit and the fourth parameter is equal to 2 to a power of the fourth bit.

For the third implementation (This is not part of the claimed invention)

FIG. 7 is a flowchart of a method for sending a DAI according to an exemplary implementation of the present application, which is applied to the terminal device and the network device as shown in FIG. 1, and the method includes at least some of the following acts 701-703.

In act 701, a network device sends DCI.

In act 702, a terminal device receives the DCI.

Herein, a bit of a counter DAI field in the DCI is a first bit.

The network device sends DCI to the terminal device, and the DCI is used for scheduling PDSCH reception or SPS release. After the terminal device receives the DCI, the first bit of the counter DAI field in the DCI may be determined, and a value of the counter DAI field may be determined.

In act 703, the terminal device sends a HARQ-ACK of a PDSCH reception or SPS release, scheduled by the DCI.

After receiving the DCI, the terminal device also needs to send the HARQ-ACK of the PDSCH reception or the SPS release, scheduled by the DCI, to the network device, so that the network device determines that the terminal device has successfully received the DCI.

In one possible implementation, when a type 2 HARQ-ACK codebook is configured, the first bit is not expected to be equal to 0.

Herein, the first bit of the counter DAI field of the DCI may be 0 bit, 1 bit, 2 bits or bits of other values, and when the type 2 HARQ-ACK codebook is configured, the terminal device does not expect the first bit to be equal to 0, to prevent a situation where HARQ-ACK multiplexing cannot be performed.

Alternatively, not expecting the first bit to be equal to 0 also means that the first bit is greater than 0, e.g., the first bit may be 1 bit, 2 bits, or bits of another numeric value.

In another possible implementation, when the type 2 HARQ-ACK codebook is configured and the first bit is equal to 0, a resource position of the HARQ-ACK is determined according to the DCI, and the HARQ-ACK corresponding to the PDSCH reception or SPS release is sent on the resource position.

When the bit of the counter DAI field in the DCI is 0 bit, the terminal device determines that HARQ-ACK multiplexing cannot be performed, and the terminal device may determine the resource position corresponding to the DCI in this case.

The resource position is used to represent a time domain position and a frequency domain position in the transmission channel.

Optionally, the terminal device determines a PUCCH resource position based on the PDCCH resource indicator and the PDSCH-to-HARQ_feedback timing indicator in the DCI.

According to the method provided by the implementations of the present application, the first bit of the counter DAI field in the DCI is 0 bit, which indicates that there is no counter DAI field in the DCI. In this case, after receiving the DCI, the terminal device obtains the resource position indicated by the DCI and transmits the HARQ-ACK on the resource position, which can ensure that the terminal device accurately transmits the HARQ-ACK and ensure the accuracy of HARQ-ACK transmission.

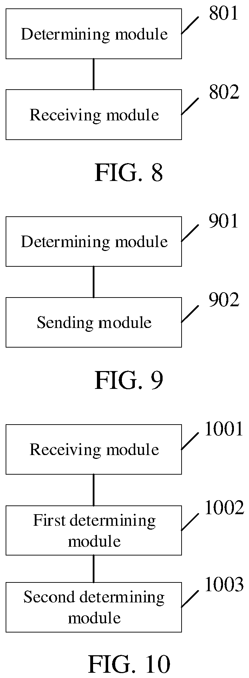

FIG. 8 shows a block diagram of a device for configuring a DAI according to an exemplary implementation of the present application, which may be realized as a terminal device, or applied in the terminal device as shown in FIG. 1. The device includes a determining module 801 and a receiving module 802.

The determining module 801 is configured to determine a first bit of a first counter DAI in a first DCI format.

The receiving module 802 is configured to receive configuration information, wherein the configuration information is used for configuring a second bit of a second counter DAI in a second DCI format.

Herein, a HARQ-ACK for PDSCH reception or semi-persistent scheduling (SPS) release, scheduled by the first DCI format, and a HARQ-ACK for PDSCH reception or SPS release, scheduled by the second DCI format, are fed back in the same HARQ-ACK codebook.

In one example, the first bit is the same as the second bit.

In one example, an effective bit of the first bit is the same as that of the second bit.

In one example, the effective bit is a minimum of the first bit and the second bit.

In one example, bits other than the effective bit in the first bit of the first counter DAI are used for indicating other information other than the first counter DAI, or bits other than the effective bit in the second bit of the second counter DAI are used for indicating other information other than the second counter DAI.

In one example, the other information at least includes one of the following:

priority information; and

open-loop power information.

In one example, the HARQ-ACK codebook is a type 2 HARQ-ACK codebook.

In one example, the configuration information is configured by high layer signaling.

FIG. 9 shows a block diagram of a device for indicating a DAI according to an exemplary implementation of the present application, which may be realized as a network device, or applied in the network device as shown in FIG. 1. The device includes a determining module 901 and a sending module 902. This is not part of the claimed invention.

The determining module 901 is configured to determine a first bit of a first counter DAI in a first DCI format.

The sending module 902 is configured to send configuration information, wherein the configuration information is used for configuring a second bit of a second counter DAI in a second DCI format.

Herein, a HARQ-ACK for PDSCH reception or SPS release, scheduled by the first DCI format, and a HARQ-ACK for PDSCH reception or SPS release, scheduled by the second DCI format, are fed back in the same HARQ-ACK codebook.

In one example, the first bit is the same as the second bit.

In one example, an effective bit of the first bit is the same as that of the second bit.

In one example, the effective bit is a minimum of the first bit and the second bit.

In one example, bits other than the effective bit in the first bit of the first counter DAI are used for indicating other information other than the first counter DAI, or bits other than the effective bit in the second bit of the second counter DAI are used for indicating other information other than the second counter DAI.

In one example, the other information at least includes one of the following:

priority information; and

open-loop power information.

In one example, the HARQ-ACK codebook is a type 2 HARQ-ACK codebook.

In one example, the configuration information is configured by high layer signaling.

FIG. 10 shows a block diagram of a device for indicating a DAI according to an exemplary implementation of the present application, which may be realized as a terminal device, or applied in the terminal device as shown in FIG. 1. The device includes a receiving module 1001, a first determining module 1002 and a second determining module 1003. This is not part of the claimed invention.

The receiving module 1001 is configured to receive DCI including a counter DAI field.

The first determining module 1002 is configured to determine a third counter DAI according to the counter DAI.

The second determining module 1003 is configured to determine a position of a HARQ-ACK fed back for PDSCH reception or SPS release, scheduled by the DCI, in a HARQ-ACK codebook according to the third counter DAI.

In one example, a format of the DCI at least includes a first DCI format and/or a second DCI format; when the format of the DCI is the first DCI format, the counter DAI is a first counter DAI, and a bit of the first counter DAI is a first bit; when the format of the DCI is the second DCI format, the counter DAI is a second counter DAI, and a bit of the second counter DAI is a second bit.

In one example, the third counter DAI is equal to the counter DAI; or, the third counter DAI is equal to a numerical value obtained by performing an operation of modulo a positive integer M on the counter DAI, or, the third counter DAI is equal to a sum of a modulus and y, wherein the modulus is a numerical value obtained by performing an operation of modulo the positive integer M on subtracted counter DAI that is obtained by subtracting y from the counter DAI, and y is a non-negative integer.

In one example, when PDSCH reception or SPS release corresponding to a HARQ-ACK fed back in a same HARQ-ACK codebook is scheduled by the first DCI format or the second DCI format, the third counter DAI is equal to the counter DAI; or, when PDSCH reception or SPS release corresponding to a HARQ-ACK fed back in a same HARQ-ACK codebook is scheduled by the first DCI format and the second DCI format, and the first bit and the second bit are the same, the third counter DAI is equal to the counter DAI; or, when PDSCH reception or SPS release corresponding to a HARQ-ACK fed back in a same HARQ-ACK codebook is scheduled by the first DCI format and the second DCI format, and the bit of the counter DAI is the minimum of the first bit and the second bit, the third counter DAI is equal to the counter DAI; or, when PDSCH reception or SPS release corresponding to a HARQ-ACK fed back in a same HARQ-ACK codebook is scheduled by the first DCI format and the second DCI format, and 2 to a power of the bit of the counter DAI is the greatest common divisor of 2 to a power of the first bit and 2 to a power of the second bit, the third counter DAI is equal to the counter DAI; or, when only the first DCI format or the second DCI format is configured, the third counter DAI is equal to the counter DAI; or, when the first DCI format and the second DCI format are configured and the first bit and the second bit are same, the third counter DAI is equal to the counter DAI; or, when the first DCI format and the second DCI format are configured and the bit of the counter DAI is the minimum of the first bit and the second bit, the third counter DAI is equal to the counter DAI; or, when the first DCI format and the second DCI format are configured, and the counter DAI bit is the greatest common divisor of 2 to a power of the first bit and 2 to a power of the second bit, the third counter DAI is equal to the counter DAI.

In one example, when PDSCH reception or SPS release corresponding to a HARQ-ACK fed back in a same HARQ-ACK codebook is scheduled by the first DCI format and the second DCI format, and the bit of the counter DAI is greater than the minimum of the first bit and the second bit, the third counter DAI is equal to a numerical value obtained by performing an operation of modulo a positive integer M on the counter DAI, or the third counter DAI is equal to a sum of a modulus and y, wherein the modulus is a numerical value obtained by performing an operation of modulo the positive integer M on subtracted counter DAI that is obtained by subtracting y from the counter DAI, and y is a non-negative integer.

Or, when PDSCH reception or SPS release corresponding to a HARQ-ACK fed back in a same HARQ-ACK codebook is scheduled by the first DCI format and the second DCI format, and 2 to a power of the bit of the counter DAI is the greatest common divisor of 2 to a power of the first bit and 2 to a power of the second bit, the third counter DAI is equal to a numerical value obtained by performing an operation of modulo a positive integer M on the counter DAI, or, the third counter DAI is equal to a sum of a modulus and y, wherein the modulus is a numerical value obtained by performing an operation of modulo the positive integer M on subtracted counter DAI that is obtained by subtracting y from the counter DAI, and y is a non-negative integer.

Or, when the first DCI format and the second DCI format are configured and the bit of the counter DAI is the minimum of the first bit and the second bit, the third counter DAI is equal to a numerical value obtained by performing an operation of modulo a positive integer M on the counter DAI;, or, the third counter DAI is equal to a sum of a modulus and y, wherein the modulus is a numerical value obtained by performing an operation of modulo the positive integer M on subtracted counter DAI that is obtained by subtracting y from the counter DAI, and y is a non-negative integer.

Or, when the first DCI format and the second DCI format are configured and 2 to a power of the bit of the counter DAI is the greatest common divisor of 2 to a power of the first bit and 2 to a power of the second bit, the third counter DAI is equal to a numerical value obtained by performing an operation of modulo a positive integer M on the counter DAI, or, the third counter DAI is equal to a sum of a modulus and y, wherein the modulus is a numerical value obtained by performing an operation of modulo the positive integer M on subtracted counter DAI that is obtained by subtracting y from the counter DAI, and y is a non-negative integer.

In one example, the positive integer M is the minimum of a first parameter and a second parameter; or, the positive integer M is the greatest common divisor of the first parameter and the second parameter; wherein, the first parameter is determined by the first bit and the second parameter is determined by the second bit.

In one example, the first parameter is equal to 2 to a power of the first bit; and/or, the second parameter is equal to 2 to a power of the second bit.

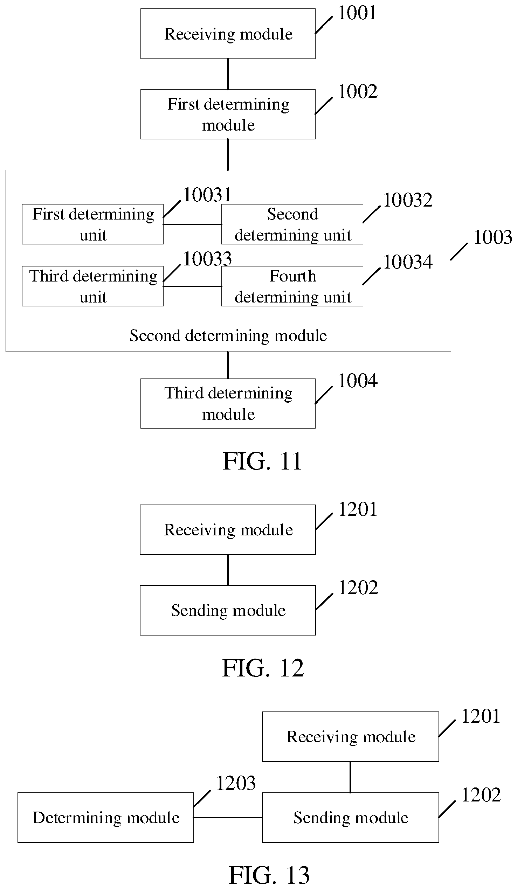

In one example, referring to FIG. 11, the second determining module 1003 includes: a first determination unit 10031 and a second determination unit 10032.

The first determination unit 10031 is configured to determine a flip accumulation parameter j_e according to the third counter DAI.

The second determination unit 10032 is configured to determine, according to the third counter DAI and the flip accumulation parameter j_e, the position of the HARQ-ACK fed back for the PDSCH reception or SPS release, scheduled by the DCI, in the HARQ-ACK codebook.

In one example, referring to FIG. 11, the second determining module 1003 includes a third determination unit 10034 configured to determine, according to the third counter DAI, a first flip accumulation parameter j_1 corresponding to the first counter DAI and a second flip accumulation parameter j_2 corresponding to the second counter DAI; a fourth determination unit 10034 configured to, when the DCI format is the first DCI format, determine the position of the HARQ-ACK fed back for PDSCH reception or SPS release, scheduled by the DCI, in the HARQ-ACK codebook according to the first counter DAI and the first flip accumulation parameter j_1; or, a fourth determination unit 10034 configured to, when the DCI format is the second DCI format, determine the position of the HARQ-ACK fed back for PDSCH reception or SPS release, scheduled by DCI, in the HARQ-ACK codebook according to the second counter DAI and the second flip accumulation parameter j_2.

In one example, the third determination unit 10033 is configured to determine a flip accumulation parameter j_e according to the third counter DAI; and determine the first flip accumulation parameter j_1 and the second flip accumulation parameter j_2 according to the third counter DAI and the flip accumulation parameter j_e.

In one example, the first determining module 1002 is configured to, when the third counter DAI is smaller than a third parameter, cumulatively increase the flip accumulation parameter j_e, wherein the third parameter is a positive integer.

In one example, the third parameter includes a historical third counter DAI, or the third parameter includes a maximum of multiple values of the third counter DAI.

In one example, the first DCI format further includes a first total DAI, and the first DCI format includes a third bit of the first total DAI; the second DCI format further includes a second total DAI, the second DCI format includes a fourth bit of the second total DAI, and the third bit and the fourth bit are independently configured; and the device further includes: a third determining module 1004 configured to determine, according to the total DAI in the DCI, a third total DAI.

FIG. 12 shows a block diagram of a device for sending a DAI according to an exemplary implementation of the present application, which may be realized as a terminal device, or applied in the terminal device as shown in FIG. 1. The device includes a receiving module 1201 and a sending module 1202. This is not part of the claimed invention.

The receiving module 1201 is configured to receive Downlink Control Information (DCI), wherein a bit of a counter DAI field in the DCI is a first bit.

The sending module 1202 is configured to send a HARQ-ACK for Physical Downlink Shared Channel (PDSCH) reception or semi-persistent scheduling (SPS) release, scheduled by the DCI.

In one example, when a type 2HARQ-ACK codebook is configured, the first bit is not expected to be equal to 0.

In one example, referring to FIG. 13, the device further includes: a determining module 1203 configured to determine, according to the DCI, a resource position of the HARQ-ACK when a type 2HARQ-ACK codebook is configured and the first bit is equal to 0; wherein the sending module 1202 is configured to only send the HARQ-ACK corresponding to the PDSCH reception or SPS release on the resource position.

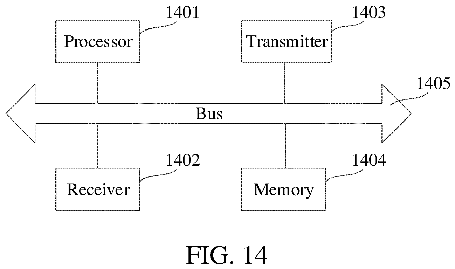

FIG. 14 shows a schematic diagram of a structure of a communication device (a terminal device or network device) according to an exemplary implementation of the present application. The communication device includes a processor 1401, a receiver 1402, a transmitter 1403, a memory 1404 and a bus 1405.

The processor 1401 includes one or more processing cores. The processor 1401 performs various functional applications and information processing by running software programs and modules.

The receiver 1402 and the transmitter 1403 may be implemented as a communication component, which may be a communication chip.

The memory 1404 is connected to the processor 1401 via the bus 1405.

The memory 1404 may be configured to store at least one instruction, and the processor 1401 is configured to execute the at least one instruction to implement various acts in the above method implementations.

In addition, the memory 1404 may be implemented by any type of transitory or non-transitory storage device or a combination thereof. The transitory or non-transitory storage device includes, but is not limited to, a magnetic disk or an optical disk, an Electrically Erasable Programmable Read Only Memory (EEPROM), an Erasable Programmable Read Only Memory (EPROM), a Static Random Access Memory (SRAM), a Read Only Memory (ROM), a magnetic memory, a flash memory, and a Programmable Read Only Memory (PROM).

In an exemplary implementation, there is further provided a computer-readable storage medium in which executable instructions are stored, the executable instructions are loaded and executed by the processor to implement a method for configuring a DAI executed by the communication device and provided by the respective method implementations above.

One of ordinary skills in the art may understand that all or part of the acts for implementing the implementations may be completed through hardware, or may be completed by instructing related hardware through programs, the programs may be stored in a computer-readable storage medium, and the above-mentioned storage medium may be a read only memory, a magnetic disk, or an optical disk, etc.

The invention is carried out in accordance with the appended claims.

**Claims**

1. A method for configuring a Downlink Allocation Index, DAI, applied to a terminal device, the method comprising:

   determining (202) a first bit of a first counter DAI in a first Downlink Control Information, DCI, format received from a network device, wherein the first bit of the first counter DAI is agreed in a protocol;
   receiving (204) configuration information, wherein the configuration information is used for configuring a second bit of a second counter DAI in a second DCI format received from the network device;
   wherein a Hybrid Automatic Repeat Request Acknowledgement, HARQ-ACK, for Physical Downlink Shared Channel, PDSCH, reception or semi-persistent scheduling, SPS, release, scheduled by the first DCI format, and a HARQ-ACK for PDSCH reception or SPS release, scheduled by the second DCI format, are fed back in a same HARQ-ACK codebook;
   wherein the first bit is the same as the second bit.

2. The method of claim 1, wherein the configuration information is configured by high layer signaling.

3. The method of claim 1, wherein an effective bit of the first bit is the same as that of the second bit.

**4.** The method of claim 3, wherein bits other than the effective bit in the first bit of the first counter DAI are used for indicating other information other than the first counter DAI, or bits other than the effective bit in the second bit of the second counter DAI are used for indicating other information other than the second counter DAI.

**5.** The method of claim 4, wherein the other information at least comprises one of the following:

priority information; and
open-loop power information.

**6.** The method of any one of claims 1 to 3, wherein the HARQ-ACK codebook is a type 2

**7.** A method for configuring a Downlink Allocation Index, DAI, applied to a network device, the method comprising:

determining (201) a first bit of a first counter DAI in a first Downlink Control Information, DCI, format sent to a terminal device, wherein the first bit of the first counter DAI is agreed in a protocol;
sending (203) configuration information to the terminal device, wherein the configuration information is used for configuring a second bit of a second counter DAI in a second DCI format sent to the terminal device;
wherein a Hybrid Automatic Repeat Request Acknowledgement, HARQ-ACK, for Physical Downlink Shared Channel, PDSCH, reception or semi-persistent scheduling, SPS, release, scheduled by the first DCI format, and a HARQ-ACK for PDSCH reception or SPS release, scheduled by the second DCI format, are fed back in a same HARQ-ACK codebook;
wherein the first bit is the same as the second bit.

**8.** The method of claim 7, wherein the configuration information is configured by high layer signaling.

**9.** The method of claim 7, wherein an effective bit of the first bit is the same as that of the second bit.

**10.** The method of claim 9, wherein bits other than the effective bit in the first bit of the first counter DAI are used for indicating other information other than the first counter DAI, or bits other than the effective bit in the second bit of the second counter DAI are used for indicating other information other than the second counter DAI.

**11.** The method of claim 10, wherein the other information at least comprises one of the following:

priority information; and
open-loop power information.

**12.** The method of any one of claims 7 to 9, wherein the HARQ-ACK codebook is a type 2 HARQ-ACK codebook.

**13.** A terminal device, configured to implement the method for configuring the DAI of any one of claims 1 to 6.

**14.** A network device, configured to implement the method for configuring the DAI of any one of claims 7 to 12.

**Patentansprüche**

**1.** Verfahren zum Auslegen eines Downlinkzuteilungsindex, DAI, der auf eine Endgerätevorrichtung angewandt wird, wobei das Verfahren Folgendes umfasst:

Bestimmen (202) eines ersten Bits eines ersten Counter-DAI in einem ersten Downlinksteuerinformations(DCI)-Format, das von einer Netzwerkvorrichtung empfangen wird, wobei das erste Bit des Counter-DAI in einem Protokoll vereinbart ist;
Empfangen (204) von Auslegungsinformationen, wobei die Auslegungsinformationen zum Auslegen eines zweiten Bits eines zweiten Counter-DAI in einem zweiten DCI-Format, das von der Netzwerkvorrichtung empfangen wird, verwendet werden;
wobei eine hybride automatische Wiederholungsanforderungsbestätigung, HARQ-ACK, für einen Empfang eines gemeinsam verwendeten physischen Downlinkkanals, PDSCH, oder eine Freigabe einer semipersistenten Planung, SPS, die vom ersten DCI-Format geplant ist, und eine HARQ-ACK für einen PDSCH-Empfang oder eine SPS-Freigabe, die vom zweiten DCI-Format geplant ist, in einem selben HARQ-ACK-Codebuch rückgemeldet werden;
wobei das erste Bit dasselbe ist wie das zweite Bit.

2. Verfahren nach Anspruch 1, wobei die Auslegungsinformationen durch eine Signalisierung einer hohen Schicht ausgelegt sind.

3. Verfahren nach Anspruch 1, wobei ein effektives Bit des ersten Bits dasselbe ist wie das des zweiten Bits.

4. Verfahren nach Anspruch 3, wobei andere Bits als das effektive Bit im ersten Bit des ersten Counter-DAI zum Anzeigen von anderen Informationen als dem ersten Counter-DAI verwendet werden oder andere Bits als das effektive Bit im zweiten Bit des zweiten Counter-DAI zum Anzeigen von anderen Informationen als dem zweiten Counter-DAI verwendet werden.

5. Verfahren nach Anspruch 4, wobei die anderen Informationen mindestens eines von Folgendem umfassen:

Prioritätsinformationen und
Open-Loop-Leistungsinformationen.

6. Verfahren nach einem der Ansprüche 1 bis 3, wobei das HARQ-ACK-Codebuch ein HARQ-ACK-Codebuch des 2. Typs ist.

7. Verfahren zum Auslegen eines Downlinkzuteilungsindex, DAI, der auf eine Netzwerkvorrichtung angewandt wird, wobei das Verfahren Folgendes umfasst:

Bestimmen (201) eines ersten Bits eines ersten Counter-DAI in einem ersten Downlinksteuerinformations(DCI)-Format, das an eine Endgerätevorrichtung gesendet wird, wobei das erste Bit des ersten Counter-DAI in einem Protokoll vereinbart ist;
Senden (203) von Auslegungsinformationen an die Endgerätevorrichtung, wobei die Auslegungsinformationen zum Auslegen eines zweiten Bits eines zweiten Counter-DAI in einem zweiten DCI-Format, das an die Endgerätevorrichtung gesendet wird, verwendet werden;
wobei eine hybride automatische Wiederholungsanforderungsbestätigung, HARQ-ACK, für einen Empfang eines gemeinsam verwendeten physischen Downlinkkanals, PDSCH, oder eine Freigabe einer semipersistenten Planung, SPS, die vom ersten DCI-Format geplant ist, und eine HARQ-ACK für einen PDSCH-Empfang oder eine SPS-Freigabe, die vom zweiten DCI-Format geplant ist, in einem selben HARQ-ACK-Codebuch rückgemeldet werden;
wobei das erste Bit dasselbe ist wie das zweite Bit.

8. Verfahren nach Anspruch 7, wobei die Auslegungsinformationen durch eine Signalisierung einer hohen Schicht ausgelegt sind.

9. Verfahren nach Anspruch 7, wobei ein effektives Bit des ersten Bits dasselbe ist wie das des zweiten Bits.

10. Verfahren nach Anspruch 9, wobei andere Bits als das effektive Bit im ersten Bit des ersten Counter-DAI zum Anzeigen von anderen Informationen als dem ersten Counter-DAI verwendet werden oder andere Bits als das effektive Bit im zweiten Bit des zweiten Counter-DAI zum Anzeigen von anderen Informationen als dem zweiten Counter-DAI verwendet werden.

11. Verfahren nach Anspruch 10, wobei die anderen Informationen mindestens eines von Folgendem umfassen:

Prioritätsinformationen und
Open-Loop-Leistungsinformationen.

12. Verfahren nach einem der Ansprüche 7 bis 9, wobei das HARQ-ACK-Codebuch ein HARQ-ACK-Codebuch des 2. Typs ist.

13. Endgerätevorrichtung, die dazu ausgelegt ist, das Verfahren zum Auslegen des DAI nach einem der Ansprüche 1 bis 6 zu implementieren.

**14.** Netzwerkvorrichtung, die dazu ausgelegt ist, das Verfahren zum Auslegen des DAI nach einem der Ansprüche 7 bis 12 zu implementieren.

**Revendications**

**1.** Procédé pour configurer un indice d'attribution de liaison descendante, DAI, appliqué à un dispositif terminal, le procédé comprenant les étapes consistant à :

déterminer (202) un premier bit d'un premier DAI de compteur dans un premier format d'information de commande de liaison descendante, DCI, reçu d'un dispositif de réseau, le premier bit du premier DAI de compteur étant convenu dans un protocole ;
recevoir (204) une information de configuration, l'information de configuration étant utilisée pour configurer un deuxième bit d'un deuxième DAI de compteur dans un deuxième format de DCI reçu du dispositif de réseau ;
dans lequel un acquittement de demande de répétition automatique hybride, HARQ-ACK, pour la réception de canal partagé de liaison descendante physique, PDSCH, ou la libération de planification semi-persistante, SPS, planifié par le premier format de DCI, et un HARQ-ACK pour la réception de PDSCH ou la libération de SPS, planifié par le deuxième format de DCI, sont renvoyés dans un même livre de codes HARQ-ACK ;
dans lequel le premier bit est le même que le deuxième bit.

**2.** Procédé selon la revendication 1, dans lequel l'information de configuration est configurée par une signalisation de couche haute.

**3.** Procédé selon la revendication 1, dans lequel un bit efficace du premier bit est le même que celui du deuxième bit.

**4.** Procédé selon la revendication 3, dans lequel des bits autres que le bit efficace dans le premier bit du premier DAI de compteur sont utilisés pour indiquer une autre information, autre que le premier DAI de compteur, ou des bits autres que le bit efficace dans le deuxième bit du deuxième DAI de compteur sont utilisés pour indiquer une autre information, autre que le deuxième DAI de compteur.

**5.** Procédé selon la revendication 4, dans lequel l'autre information comprend au moins une des suivantes :

une information de priorité ; et
une information de puissance en boucle ouverte.

**6.** Procédé selon l'une quelconque des revendications 1 à 3, dans lequel le livre de codes HARQ-ACK est un livre de codes HARQ-ACK de type 2.

**7.** Procédé pour configurer un indice d'attribution de liaison descendante, DAI, appliqué à un dispositif de réseau, le procédé comprenant les étapes consistant à :

déterminer (201) un premier bit d'un premier DAI de compteur dans un premier format d'information de commande de liaison descendante, DCI, envoyé à un dispositif terminal, le premier bit du premier DAI de compteur étant convenu dans un protocole ;
envoyer (203) une information de configuration au dispositif terminal, l'information de configuration étant utilisée pour configurer un deuxième bit d'un deuxième DAI de compteur dans un deuxième format de DCI envoyé au dispositif terminal ;
dans lequel un acquittement de demande de répétition automatique hybride, HARQ-ACK, pour la réception de canal partagé de liaison descendante physique, PDSCH, ou la libération de planification semi-persistante, SPS, planifié par le premier format de DCI, et un HARQ-ACK pour la réception de PDSCH ou la libération de SPS, planifié par le deuxième format de DCI, sont renvoyés dans un même livre de codes HARQ-ACK ;
dans lequel le premier bit est le même que le deuxième bit.

**8.** Procédé selon la revendication 7, dans lequel l'information de configuration est configurée par une signalisation de couche haute.

**9.** Procédé selon la revendication 7, dans lequel un bit efficace du premier bit est le même que celui du deuxième bit.

**10.** Procédé selon la revendication 9, dans lequel des bits autres que le bit efficace dans le premier bit du premier DAI de compteur sont utilisés pour indiquer une autre information, autre que le premier DAI de compteur, ou des bits autres que le bit efficace dans le deuxième bit du deuxième DAI de compteur sont utilisés pour indiquer une autre information, autre que le deuxième DAI de compteur.

**11.** Procédé selon la revendication 10, dans lequel l'autre information comprend au moins une des suivantes :

une information de priorité ; et
une information de puissance en boucle ouverte.

**12.** Procédé selon l'une quelconque des revendications 7 à 9, dans lequel le livre de codes HARQ-ACK est un livre de codes HARQ-ACK de type 2.

**13.** Dispositif terminal, configuré pour mettre en oeuvre le procédé de configuration du DAI selon l'une quelconque des revendications 1 à 6.

**14.** Dispositif de réseau, configuré pour mettre en oeuvre le procédé de configuration du DAI selon l'une quelconque des revendications 7 à 12.

Access network 12

120

14

Access network 12

120

FIG. 1

Terminal Device

Network Device

Act 201, the network device determines a first bit of a first counter DAI in a first DCI format

Act 202, the terminal device determines the first bit of the first counter DAI in the first DCI format

Act 203, the network device sends configuration information

Act 204, the terminal device receives the configuration information

Act 205, according to the counter DAI in the DCI, the terminal device determines a position, where a HARQ-ACK for PDSCH reception or semi-persistent scheduling release, scheduled by a DCI format, is fed back, in a HARQ-ACK codebook

FIG. 2

Terminal Device

Network Device

Act 301, the network device sends DCI

Act 302, the terminal device receives the DCI

Act 303, the terminal device determines a third counter DAI according to a counter DAI

Act 304, the terminal device determines a position, where a HARQ-ACK for PDSCH reception or SPS release, scheduled by the DCI, is fed back, in a HARQ-ACK codebook according to the third counter DAI

FIG. 3

| Terminal Device | | Network Device |
|---|---|---|

Act 301, the network device sends DCI

Act 302, the terminal device receives the DCI

Act 303, the terminal device determines a third counter DAI according to a counter DAI

Act 4011, the terminal device determines a first flip accumulation parameter j_1 corresponding to a first counter DAI and a second flip accumulation parameter j_2 corresponding to a second counter DAI according to the third counter DAI

Act 4012, when a DCI format is a first DCI format, the terminal device determines a position, where a HARQ-ACK for PDSCH reception or SPS release, scheduled by the DCI, is fed back, in a HARQ-ACK codebook according to the first counter DAI and the first flip accumulation parameter j_1

Act 4013, when a DCI format is a second DCI format, the terminal device determines a position, where a HARQ-ACK for PDSCH reception or SPS release, scheduled by the DCI, is fed back, in a HARQ-ACK codebook according to the second counter DAI and the second flip accumulation parameter j_2

FIG. 4

Terminal Device

Network Device

Act 301, the network device sends DCI

Act 302, the terminal device receives the DCI

Act 303, the terminal device determines a third counter DAI according to a counter DAI

Act 5011, the terminal device determines a flip accumulation parameter j_e according to the third counter DAI

Act 5012, the terminal device determines a first flip accumulation parameter j_1 and a second flip accumulation parameter j_2 according to the third counter DAI and the flip accumulation parameter j_e

Act 4012, when a DCI format is a first DCI format, the terminal device determines a position, where a HARQ-ACK for PDSCH reception or SPS release, scheduled by the DCI, is fed back, in a HARQ-ACK codebook according to the first counter DAI and the first flip accumulation parameter j_1

Act 4013, when a DCI format is a second DCI format, the terminal device determines a position, where a HARQ-ACK for PDSCH reception or SPS release, scheduled by the DCI, is fed back, in a HARQ-ACK codebook according to the second counter DAI and the second flip accumulation parameter j_2

FIG. 5

Terminal Device | Network Device

Act 301, the network device sends DCI

Act 302, the terminal device receives the DCI

Act 303, the terminal device determines a third counter DAI according to a counter DAI

Act 6011, determine a flip accumulation parameter j_e according to the third counter DAI

Act 6012, according to the third counter DAI and the flip accumulation parameter j_e, determine a position, where a HARQ-ACK for PDSCH reception or SPS release, scheduled by the DCI, is fed back, in a HARQ-ACK codebook

## FIG. 6

Terminal Device | Network Device

Act 701, the network device sends DCI

Act 702, the terminal device receives the DCI

Act 703, the terminal device sends a HARQ-ACK for PDSCH reception or SPS release, scheduled by the DCI

## FIG. 7

Determining module ⟋ 801

Receiving module ⟋ 802

FIG. 8

Determining module ⟋ 901

Sending module ⟋ 902

FIG. 9

Receiving module ⟋ 1001

First determining module ⟋ 1002

Second determining module ⟋ 1003

FIG. 10

Receiving module 1001

First determining module 1002

First determining unit 10031

Second determining unit 10032

Third determining unit 10033

Fourth determining unit 10034

1003

Second determining module

Third determining module 1004

FIG. 11

Receiving module 1201

Sending module 1202

FIG. 12

Receiving module 1201

Determining module 1203

Sending module 1202

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3358877 A1